# EUROPEAN PATENT APPLICATION

(11) **EP 4 588 660 A1**
(43) Date of publication of application: **23.07.2025**
(21) Application number: 23865570.8
(22) Date of filing: 13.09.2023
(51) Int. Cl.: B32B 27/18, B32B 5/02, B32B 27/12, B32B 27/32

(54) **LAMINATED BODY AND MANUFACTURING METHOD THEREFOR**

(30) Priority: 13.09.2022 JP 2022145222; 13.09.2022 JP 2022145223; 13.09.2022 JP 2022145224
(71) Applicant: Mitsubishi Chemical Corporation, Tokyo 100-8251 (JP)
(72) Inventor: MATSUI, Jun, Tokyo 100-8251 (JP); KATO, Yukio, Tokyo 100-8251 (JP); TAKATA, Nobuaki, Tokyo 100-8251 (JP); KAWAHARA, Yuki, Tokyo 100-8251 (JP)
(74) Representative: Vossius & Partner Patentanwälte Rechtsanwälte mbB
(86) International application number: PCT/JP2023/033407
(87) International publication number: WO 2024/058221

(57) **Abstract**

Provided is a laminated body including a resin layer and a support layer laminated on at least one surface of the resin layer, wherein the resin layer comprises a resin composition containing a thermoplastic resin (A), a flame retardant (B), and fibers (C); the laminated body has a thickness of 0.5 mm or more; and the thickness of the resin layer is equal to or greater than twice the thickness of the support layer.

## Description

### TECHNICAL FIELD

The present invention relates to a laminated body and a production method therefor, and more particularly relates to a laminated body having excellent flame retardancy and fire blocking performance.

### BACKGROUND ART

In recent years, electric vehicles and hybrid vehicles are under research and development as part of environmental measures. High-energy density and light-weight batteries are under intense development with the aim of improving the driving range. Because an unexpected accident may cause such a high-energy density battery to ignite and, as a safety measure for passengers, a housing material of the battery needs to have high fire blocking performance. Thus, in a high-energy density battery, a metal material such as iron is often used in combination with a fireproofing material.

However, a disadvantage of using a metal material in a battery is an increase in the weight of the battery. When a fireproofing material is used in combination, processability and an increase in cost due to increased number of parts may become problematic. Thus, attempts to use resins are made. The use of resins may possibly achieve both weight reduction and fire blocking performance.

Meanwhile, reduction of carbon dioxide emission and recyclability are currently regarded as important factors for a sustainable society. Many thermosetting materials have high flame retardancy and are commonly used as composite materials, but in terms of recyclability, thermoplastic resin materials have more advantages.

Meanwhile, the safety standard GB 38031-2020 "Electric Vehicles Traction Battery Safety Requirements" was announced in China. According to this standard, an alarm is required to be issued 5 minutes before thermal runaway of a battery. It is conceived that this can be also achieved by a housing material that blocks fire for at least 5 minutes after ignition of the battery.

In view of these problems, Patent Literature 1 proposes a material obtained by adding a bromine-based flame retardant and an antimony oxide compound in a carbon fiber-reinforced polypropylene resin, for example. However, additives used in this material have a problem of biopersistence.

Meanwhile, Patent Literature 2 proposes a flame-retardant polyolefin-based composition containing a (poly)phosphate compound in a polyolefin-based resin as a technology to impart flame retardancy to a polypropylene-based resin while taking biopersistence into consideration.

Patent Literature 3 proposes a flame-retardant resin composition containing long glass fibers and a phosphate compound in a polypropylene resin.

### CITATION LIST

### PATENT LITERATURE

Patent Literature 1: JP 2014-62189 A
Patent Literature 2: JP 2013-119575 A
Patent Literature 3: JP 2011-88970 A

### SUMMARY OF INVENTION

### TECHNICAL PROBLEM

As described above, the use of resins has a possibility to achieve both weight reduction of a high-energy density battery and fire blocking performance, but known technologies are often unsatisfactory. Specifically, the carbon fiber-reinforced polypropylene resin composition disclosed in Patent Literature 1 has a problem of biopersistence of used additives and a problem that adequate strength or rigidity of a molded article cannot be achieved by the carbon fiber length described in the Patent Literature.

Furthermore, the resin composition disclosed in Patent Literature 2 has a problem that the phosphorus-based flame retardant has poor dispersibility and, although flame retardancy can be achieved by adding a large amount of the phosphorus-based flame retardant, it causes a significant decrease in the strength of a polypropylene-based resin. In addition, incorporation of a large amount of a flame retardant into a molded article causes a problem that molding defects (incomplete filling) tend to occur during molding.

Furthermore, the flame-retardant resin composition disclosed in Patent Literature 3 needs to contain a large amount of a phosphorus-based flame retardant as in the case of Patent Literature 2, and poses a problem that the mechanical properties of a molded article and the fluidity during molding cannot be maintained.

As described above, the flame-retardant resin compositions disclosed in Patent Literatures 2 and 3 do not have adequate flame retardancy and, in particular, have unsatisfactory fire blocking performance when an attempt is made to ensure the mechanical properties of a molded article and the fluidity during molding.

The present invention has been made to solve the problems described above, and an object of the present invention is to provide a laminated body having excellent flame retardancy and, in particular, having excellent fire blocking performance.

### SOLUTION TO PROBLEM

As a result of diligent research to solve the problems described above, the present inventors have found that the problems described above can be solved by a laminated body including a resin layer having a specific composition and a support layer laminated on at least one surface of the resin layer, wherein the laminated body has a specific thickness, and the thickness of the resin layer falls within a specific range with respect to the thickness of the support layer. The present invention has been completed based on these findings. Specifically, the present invention provides [1] to [19] below.
[1] A laminated body including a resin layer and a support layer laminated on at least one surface of the resin layer, wherein the resin layer is composed of a resin composition containing a thermoplastic resin (A), a flame retardant (B), and fibers (C); the laminated body has a thickness of 0.5 mm or more; and a thickness of the resin layer is equal to or greater than twice a thickness of the support layer.
[2] The laminated body according to [1] above, wherein the support layer contains a fiber layer composed of fibers (X).
[3] The laminated body according to [2] above, wherein the fiber layer contains a non-woven fabric layer composed of a non-woven fabric, a woven fabric layer composed of a woven fabric, or a knitted fabric layer composed of a knitted fabric.
[4] The laminated body according to [2] or [3] above, wherein the fibers (X) forming the fiber layer have a mean fiber length of from 5 to 100 mm.
[5] The laminated body according to any one of [1] to [4] above, wherein the fibers have a mean fiber length of from 0.05 to 100 mm.
[6] The laminated body according to any one of [1] to [5] above, wherein the resin composition further contains a dispersant (D).
[7] The laminated body according to any one of [1] to [6] above, wherein the resin layer has a thickness of from 0.5 to 50 mm.
[8] The laminated body according to any one of [1] to [7] above, wherein the flame retardant (B) contains a phosphorus-based flame retardant.
[9] The laminated body according to any one of [1] to [8] above, wherein the flame retardant (B) contains an intumescent flame retardant.
[10] The laminated body according to any one of [2] to [9] above, wherein the fibers (X) forming the fiber layer contain inorganic fibers.
[11] The laminated body according to [10] above, wherein the inorganic fibers forming the fiber layer contain at least one selected from the group consisting of glass fibers, ceramic fibers, metal fibers, and metal oxide fibers.
[12] The laminated body according to any one of [1] to [11] above, wherein the fibers (C) contain inorganic fibers.
[13] The laminated body according to [12] above, wherein the inorganic fibers contain at least one selected from a group consisting of glass fibers, ceramic fibers, metal fibers, and metal oxide fibers.
[14] The laminated body according to any one of [6] to [13] above, wherein the dispersant (D) contains a copolymer of an α-olefin and an unsaturated carboxylic acid.
[15] The laminated body according to any one of [1] to [14] above, wherein the thermoplastic resin (A) contains a polypropylene-based resin, and a content of the polypropylene-based resin in the resin composition is from 15 to 80 mass%.
[16] The laminated body according to any one of [1] to [15] above, wherein a content of the flame retardant (B) in the resin composition is from 1 to 40 mass%.
[17] The laminated body according to any one of [6] to [16] above, wherein a content of the dispersant (D) is from 0.1 to 25 parts by mass per 100 parts by mass of the flame retardant (B).
[18] A method for producing the laminated body according to any one of [1] to [17] above, the method including forming a support layer laminated on at least one surface of a resin layer by impregnating a support with a resin composition, wherein the support has a thickness of from 0.01 to 30 mm before being impregnated with the resin composition.
[19] The method for producing the laminated body according to [18] above, wherein a support compression ratio defined by a ratio of a thickness of the support layer in the laminated body to a thickness of the support before being impregnated with the resin composition is from 15 to 75%.

### ADVANTAGEOUS EFFECTS OF INVENTION

According to the present invention, a laminated body having excellent flame retardancy and, in particular, having excellent fire blocking performance can be provided.

### BRIEF DESCRIPTION OF DRAWINGS

FIG. 1 is a schematic view illustrating an embodiment of the laminated body of the present invention.
FIG. 2 is a schematic view illustrating the positional relationship between a flame and the laminated body of the present invention.
FIG. 3 is a schematic view illustrating another embodiment of the laminated body of the present invention.
FIG. 4 is a schematic view illustrating another embodiment of the laminated body of the present invention.
FIG. 5 is a schematic view illustrating an example of a method for producing the laminated body of the present invention.
FIG. 6 is a conceptual diagram illustrating a method for measuring the flexural modulus and flexural strength of a laminated body according to another embodiment of the present invention.
FIG. 7 is a conceptual diagram illustrating the structure of a battery according to another embodiment of the present invention.
FIG. 8 is a schematic view illustrating an outline of flame contact evaluation in Examples of the present invention.

Embodiments of the present invention will be described in detail below; however, the present invention is not limited to the following description, which is an example of embodiments of the present invention.

### Laminated Body

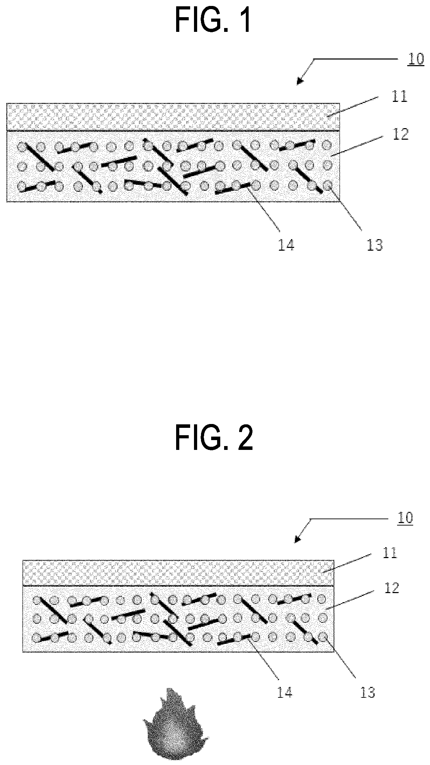

A laminated body 10 according to an embodiment of the present invention includes a resin layer 12 and a support layer 11 laminated on at least one surface of the resin layer 12 as illustrated in the schematic view of FIG. 1, and has a thickness of 0.5 mm or more. As described below in detail, the resin layer 12 contains a flame retardant 13 and fibers 14.

The laminated body is characterized in that the thickness of the resin layer is equal to or greater than twice the thickness of the support layer. When the thickness of the resin layer is equal to or greater than twice the thickness of the support layer, the laminated body can be provided with adequate fire blocking performance. From the viewpoints described above, the thickness of the resin layer is preferably equal to or greater than 2.5 times, more preferably equal to or greater than 5 times, even more preferably equal to or greater than 8 times, and particularly preferably equal to or greater than 10 times the thickness of the support layer.

Meanwhile, the upper limit of the thickness of the resin layer with respect to the thickness of the support layer is not particularly limited as long as the thickness of the laminated body is set to 0.5 mm or more, and is appropriately determined depending on the intended use. Generally, the upper limit is preferably equal to or less than 50 times, more preferably equal to or less than 45 times, even more preferably equal to or less than 30 times, yet even more preferably equal to or less than 20 times, and yet even more preferably equal to or less than 15 times.

The thickness of the resin layer is not particularly limited as long as the ratio described above is satisfied; however, the thickness of the resin layer is preferably 0.5 mm or more for achieving adequate fire blocking performance. Meanwhile, a preferred thickness of the resin layer varies depending on the intended use. Generally, the thickness of the resin layer is preferably 50 mm or less. From the viewpoints described above, the thickness of the resin layer is more preferably in a range of 1 to 25 mm, even more preferably in a range of 1.3 to 15 mm, yet even more preferably in a range of 1.5 to 10 mm, and particularly preferably in a range of 1.7 to 5 mm.

In a preferred embodiment, the thickness of the resin layer is 70% or more of the total thickness of the resin layer and the support layer from the viewpoint of imparting even better fire blocking performance to the laminated body. From the same viewpoint, the thickness of the resin layer is more preferably 75% or more, even more preferably 80% or more, and particularly preferably 85% or more, with respect to the total thickness of the resin layer and the support layer.

Meanwhile, the upper limit of the thickness of the resin layer is not particularly limited and is appropriately determined depending on the intended use. Generally, the thickness of the resin layer is preferably 98% or less, and more preferably 95% or less.

The laminated body of the present embodiment is only required to have the resin layer and the support layer laminated on at least one surface of the resin layer, and an embodiment in which an adhesive layer is provided between the resin layer and the support layer is not excluded. From the viewpoint of improving fire blocking performance, the bonding between the resin layer and the support layer is important, and preferably, the resin layer and the support layer are directly bonded without interposing another layer therebetween. From the same viewpoint, more preferably, the resin layer and the support layer are directly bonded in the laminated body through melting of at least a portion of the resin composition contained in the resin layer. Particularly preferably, the resin layer and the support layer are directly bonded in the laminated body through melting of at least a portion of the resin composition contained in the resin layer and impregnation of the support layer with the melted resin composition.

### Resin Layer

The resin layer constituting the laminated body of the present embodiment is composed of a resin composition containing a thermoplastic resin (A), a flame retardant (B), and fibers (C). The thermoplastic resin (A), the flame retardant (B), and the fibers (C) constituting the resin composition will be described in detail below.

### (A) Thermoplastic Resin

In the present embodiment, the thermoplastic resin contained in the resin composition forming the resin layer is not particularly limited. Examples of the thermoplastic resin include a polyolefin resin, a polycarbonate resin, a polyester resin, an acrylonitrile-styrene resin, an ABS resin, a polyamide resin, modified polyphenylene oxide, polyvinyl chloride, polystyrene, polyvinyl acetate, and polyurethane. One of these resins may be used alone, or two or more thereof may be used in combination. For example, the thermoplastic resin (A) may be a composite resin of two or more of the thermoplastic resins described above.

Among these, a polyolefin resin is preferred, and a polypropylene-based resin is particularly preferred, from the viewpoints of the physical properties, versatility, and cost of the resin.

The polyolefin resin is not particularly limited, and examples thereof include the resins described below. The polyester resin is not particularly limited, and examples thereof include polybutylene terephthalate. The polyamide resin is not particularly limited, and examples thereof include nylon 66 and nylon 6.

In particular, the present embodiment is useful when the resin composition contains as the thermoplastic resin (A) at least a polyolefin resin among the above-described resins. In the present invention, "polyolefin resin" means a resin in which the proportion of an olefin unit or a cycloolefin unit is 90 mol% or more per 100 mol% of all constituent units constituting the resin.

The proportion of an olefin unit or a cycloolefin unit is preferably 95 mol% or more, and particularly preferably 98 mol% or more, per 100 mol% of all constituent units constituting the polyolefin resin.

Examples of the polyolefin resin include α-olefin polymers, such as polyethylene, polypropylene, polybutene, poly(3-methyl-1-butene), poly(3-methyl-1-pentene), and poly(4-methyl-1-pentene); α-olefin copolymers, such as an ethylene-propylene block or random copolymer, a block or random copolymer of propylene and an α-olefin having 4 or more carbons, an ethylene-methyl methacrylate copolymer, and an ethylene-vinyl acetate copolymer; and cycloolefin polymers, such as polycyclohexene and polycyclopentene.

Examples of the polyethylene include low-density polyethylene, straight-chain low-density polyethylene, and high-density polyethylene. Examples of the polypropylene include isotactic polypropylene, syndiotactic polypropylene, hemiisotactic polypropylene, and stereoblock polypropylene. In the α-olefin having 4 or more carbons in the block or random copolymer of propylene, example of an α-olefin having 4 or more carbons include butene, 3-methyl-1-butene, 3-methyl-1-pentene, and 4-methyl-1-pentene.

In the laminated body according to the present embodiment, the thermoplastic resin (A) is particularly preferably a polypropylene-based resin among the above-described resins. The polypropylene-based resin will be described in detail below.

One of the polyolefin resins described above may be used alone, or two or more thereof may be used in combination.

### Melt Flow Rate (MFR)

In the present embodiment, the melt flow rate (hereinafter also abbreviated as MFR) (230°C, 2.16 kg load) of the thermoplastic resin (A) contained in the resin layer is preferably from 5 to 500 g/10 min. When the MFR is 5 g/10 min or more, for example, good fluidity is achieved upon formation of a molded article by injection molding, resulting in good processability. Meanwhile, when the MFR is 500 g/10 min or less, a molded article has adequate strength. From the viewpoints described above, the MFR is preferably in a range of 10 to 300 g/10 min, more preferably in a range of 20 to 200 g/10 min, and even more preferably in a range of 25 to 100 g/10 min.

The MFR of the thermoplastic resin (A) can be adjusted by, for example, controlling a hydrogen concentration during polymerization. The MFR is a value measured in accordance with JIS K 7210-1.

### Content of Thermoplastic Resin (A)

In the present embodiment, the content of the thermoplastic resin (A) in the resin composition described above is not particularly limited, but is preferably from 15 to 80 mass%. When the content of the thermoplastic resin is 15 mass% or more, particularly good formability is achieved, and formation of a molded article is facilitated. Meanwhile, when the content is 80 mass% or less, adequate amounts of a flame retardant, a dispersant, inorganic fibers, and the like can be contained, and good fire blocking performance can be achieved. From the viewpoints described above, the content of the thermoplastic resin in the resin composition is preferably from 35 to 70 mass%, and more preferably from 40 to 60 mass%. Also in a case where the thermoplastic resin (A) is a preferred polypropylene-based resin described above, the preferred content is the same.

### (A-1) Polypropylene-Based Resin

In the present embodiment, the thermoplastic resin (A) constituting the resin composition described above preferably contains a polypropylene-based resin, as described above. Examples of the polypropylene-based resin include a propylene homopolymer and a propylene-α-olefin copolymer. The propylene-α-olefin copolymer may be a random copolymer or a block copolymer.

### α-Olefin

Examples of the α-olefin constituting the copolymer described above include ethylene, 1-butene, 2-methyl-1-propene, 1-pentene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, and 1-octene. One of these may be used for copolymerization with propylene, or two or more of these may be used for copolymerization with propylene. In particular, from the viewpoint of improving the impact strength of the laminated body, ethylene or 1-butene, which has a great effect on the improvement of impact strength, is preferred, and ethylene is most preferred.

### Propylene-Ethylene Random Copolymer

In the case of a propylene-ethylene random copolymer, the propylene unit is contained in an amount of preferably from 90 to 99.5 mass%, and more preferably from 92 to 99 mass%, and the ethylene unit is contained in an amount of preferably from 0.5 to 10 mass%, and more preferably from 1 to 8 mass%. When the amount of the ethylene unit is equal to or greater than the lower limit described above, the laminated body achieves adequate impact strength, whereas when the amount of the ethylene unit is equal to or less than the upper limit described above, adequate rigidity is maintained.

The contents of the propylene unit and the ethylene unit in the propylene-ethylene random copolymer can be adjusted by controlling the compositional ratio of propylene and ethylene during polymerization of the propylene-ethylene random copolymer.

The propylene content in the propylene-ethylene random copolymer is a value measured by using a cross-fractionation apparatus, FT-IR, or the like and, for example, a method described in JP 2008-189893 A can be employed as the measurement conditions.

### Modified Polyolefin-Based Resin

In the present embodiment, the resin composition described above can further contain a modified polyolefin-based resin in addition to the polypropylene-based resin described above. Specific examples of the modified polyolefin-based resin include an acid-modified polyolefin-based resin and a hydroxy-modified polyolefin-based resin. One of these may be used alone, or a combination of these may be used.

The types of the acid-modified polyolefin-based resin and the hydroxy-modified polyolefin-based resin to be used as the modified polyolefin-based resin are not particularly limited, and known resins can be used.

### Acid-Modified Polyolefin-Based Resin

Examples of the acid-modified polyolefin-based resin include a resin prepared by chemical modification of a copolymer obtained by subjecting a polyolefin, such as polyethylene, polypropylene, an ethylene-α-olefin copolymer, an ethylene-α-olefin-non-conjugated diene compound copolymer (e.g., EPDM), an ethylene-aromatic monovinyl compound-conjugated diene compound copolymer elastomer, to graft copolymerization using an unsaturated carboxylic acid, such as maleic acid or maleic anhydride.

This graft copolymerization is performed by, for example, reacting the polyolefin described above with an unsaturated carboxylic acid using a radical generator, such as benzoyl peroxide, in an appropriate solvent. The component of the unsaturated carboxylic acid or derivative thereof can be introduced into a polymer chain by random or block copolymerization with a monomer for polyolefin.

The unsaturated carboxylic acid used for the modification is, for example, a compound which has a polymerizable double bond and in which a carboxyl group and, as needed, a functional group such as a hydroxyl group or an amino group are introduced, such as maleic acid, fumaric acid, itaconic acid, acrylic acid, or methacrylic acid.

Furthermore, examples of the derivative of the unsaturated carboxylic acid include an acid anhydride, an ester, an amide, an imide, and a metal salt of the unsaturated carboxylic acid. Specific examples thereof include maleic anhydride, itaconic anhydride, methyl acrylate, ethyl acrylate, butyl acrylate, and methyl methacrylate. Among these, maleic anhydride is preferred.

Preferred examples of the acid-modified polyolefin-based resin include a modified resin obtained by subjecting an olefin-based polymer containing ethylene and/or propylene as a main polymer constituent unit to graft polymerization with maleic anhydride, and a modified resin obtained by subjecting an olefin mainly containing ethylene and/or propylene to copolymerization with maleic anhydride. Specific examples of the acid-modified polyolefin-based resin include a combination of polyethylene/maleic anhydride-grafted ethylene-butene-1 copolymer, or a combination of polypropylene/maleic anhydride-grafted polypropylene.

### Hydroxy-Modified Polyolefin-Based Resin

The hydroxy-modified polyolefin-based resin is a modified polyolefin-based resin containing a hydroxyl group. The hydroxy-modified polyolefin-based resin may have a hydroxyl group at an appropriate position, such as at a terminal of a main chain or on a side chain.

Examples of the olefin-based resin constituting the hydroxy-modified polyolefin-based resin include a homopolymer or copolymer of an α-olefin such as ethylene, propylene, butene, 4-methylpentene-1, hexene, octene, nonene, decene, or dodecene, and a copolymer of the α-olefin and a copolymerizable monomer.

Preferred examples of the hydroxy-modified polyolefin-based resin include a hydroxy-modified polyethylene-based resin of, low-density, medium-density, or high-density polyethylene, straight-chain low-density polyethylene, ultra-high molecular weight polyethylene, an ethylene-(meth)acrylate copolymer, or an ethylene-vinyl acetate copolymer, a hydroxy-modified polypropylene-based resin of a polypropylene homopolymer such as isotactic polypropylene, a random copolymer of propylene and an α-olefin (e.g., ethylene, butene, or hexene), a propylene-α-olefin block copolymer, and hydroxy-modified poly(4-methylpentene-1).

### (B) Flame Retardant

In the present embodiment, the resin composition forming the resin layer contains the flame retardant (B). The flame retardant (B) is not particularly limited, and examples thereof include a phosphorus-based flame retardant, a bromine-based flame retardant, and an antimony-based flame retardant. Among these, a phosphorus-based flame retardant is preferred from the viewpoint of improving fire blocking performance. For classification focusing on the mechanism of action of a flame retardant, the flame retardant (B) is preferably an intumescent flame retardant from the viewpoint of improving fire blocking performance.

### Phosphorus-Based Flame Retardant

The phosphorus-based flame retardant is a phosphorus compound, that is, a compound containing a phosphorus atom in the molecule. The phosphorus-based flame retardant exhibits a flame-retardant effect by forming char (carbonized membrane) during combustion of the resin composition.

The phosphorus-based flame retardant may be a known phosphorus-based flame retardant, such as a (poly)phosphate salt or a (poly)phosphate ester. As used herein, "(poly)phosphate salt" refers to a phosphate salt or a polyphosphate salt, and "(poly)phosphate ester" refers to a phosphate ester or a polyphosphate ester.

The phosphorus-based flame retardant is preferably in the form of solid at 80°C.

From the viewpoint of flame retardancy, the phosphorus-based flame retardant is preferably a (poly)phosphate salt.

Examples of the (poly)phosphate salt include ammonium polyphosphate, melamine polyphosphate, piperazine polyphosphate, piperazine orthophosphate, melamine pyrophosphate, piperazine pyrophosphate, melamine orthophosphate, calcium phosphate, and magnesium phosphate.

Similarly, a compound in which melamine or piperazine of the above-exemplified compound is replaced with an alternative nitrogen compound can be used. Examples of the alternative nitrogen compound include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-tetraethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acryloguanamine, 2,4-diamino-6-nonyl-1,3,5- triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzoguanamine, acetoguanamine, phthalodiguanamine, melamine cyanurate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine. One of these (poly)phosphate salts may be used alone, or two or more thereof may be used in combination.

Among the phosphorus-based flame retardants described above, a salt of (poly)phosphoric acid and a nitrogen compound (hereinafter also referred to as "compound (B1)") is preferred. The compound (B1) is an intumescent flame retardant. The intumescent flame retardant is a flame retardant that suppresses combustion of a material by forming a surface intumescent layer which prevents radiant heat from a combustion source and diffusion of a combustion gas or smoke from a burning material to the outside. When the surface intumescent layer is formed, diffusion of a decomposition product and heat transfer are suppressed, and excellent flame retardancy is exhibited.

Examples of the nitrogen compound in the compound (B1) include ammonia, melamine, piperazine, and the alternative nitrogen compounds described above. Specific examples of the nitrogen compound include ammonium salts and amine salts of (poly)phosphoric acid, such as ammonium polyphosphate, melamine polyphosphate, piperazine polyphosphate, ammonium pyrophosphate, melamine pyrophosphate, and piperazine pyrophosphate. Zinc oxide may also be contained as a flame retardant aid. This case is preferred because the flame-retardant performance is further improved.

Examples of commercially available phosphorus-based flame retardants include ADK STAB FP-2100J, FP-2200, and FP-2500S (available from ADEKA CORPORATION).

### Bromine-Based Flame Retardant

Examples of the bromine-based flame retardant include decabromodiphenyl ether, tetrabromobisphenol A, tetrabromobisphenol S, 1,2-bis(2',3',4',5',6'-pentabromophenyl)ethane, 1,2-bis(2,4,6-tribromophenoxy)ethane, 2,4,6-tris(2,4,6-tribromophenoxy)-1,3,5-triazine, 2,6-dibromophenol, 2,4-dibromophenol, brominated polystyrene, ethylenebistetrabromophthalimide, hexabromocyclododecane, hexabromobenzene, pentabromobenzyl acrylate, 2,2-bis[4'(2",3"-dibromopropoxy)-3',5'-dibromophenyl]-propane, bis[3,5-dibromo-4-(2,3-dibromopropoxy)phenyl]sulfone, and tris(2,3-dibromopropyl) isocyanurate.

### Antimony-Based Flame Retardant

Examples of the antimony-based flame retardant include antimony trioxide, antimony tetroxide, antimony pentoxide, sodium pyroantimonate, antimony trichloride, antimony trisulfide, antimony oxychloride, antimony perchloropentane dichloride, and potassium antimonate. In particular, antimony trioxide and antimony pentoxide are preferred.

Among the flame retardants described above, a phosphorus-based flame retardant is preferred from the viewpoints of exhibiting no biopersistence and achieving excellent flame retardancy, and a non-halogen-based flame retardant is preferred from the viewpoint of environmental friendliness. Furthermore, an intumescent flame retardant is preferred from the viewpoint of improving fire blocking performance of the resulting laminated body.

One of the flame retardants described above may be used alone, or two or more thereof may be used in combination.

### Content of Flame Retardant (B)

In the present embodiment, the content of the flame retardant in the resin composition is not particularly limited, but is preferably in a range of 1 to 40 mass%. When the content is 1 mass% or more, good flame retardancy can be imparted to the molded article, and good fire blocking performance can be achieved. Meanwhile, when the content of the flame retardant is 40 mass% or less, the thermoplastic resin can be contained in an adequate proportion, and better formability is achieved. From the viewpoints described above, the content of the flame retardant in the resin composition of the present embodiment is more preferably in a range of 1 to 35 mass%, even more preferably in a range of 3 to 30 mass%, and particularly preferably from 5 to 25 mass%.

### (C) Fibers

In the present embodiment, the resin composition forming the resin layer contains the fibers (C). The fibers (C) may be organic fibers or inorganic fibers, and inorganic fibers are preferred from the viewpoint of heat resistance. Examples of the inorganic fibers include: glass fibers; rock wool; basalt fibers; ceramic fibers or metal oxide fibers such as alumina fibers, silica-alumina fibers, potassium titanate fibers, calcium silicate (wollastonite) fibers, alkaline earth silicate fibers (biosoluble), and silica fibers; carbon fibers; and metal fibers such as stainless steel fibers and tungsten fibers. One of these inorganic fibers may be used alone, or two or more thereof may be used in combination.

Among these inorganic fibers, at least one selected from the group consisting of glass fibers, ceramic fibers such as alumina fibers, metal oxide fibers, and carbon fibers is preferred from the viewpoint of capability of improving heat resistance and fire blocking performance.

The fibers (C) described above preferably has an average fiber diameter of from 3 to 25 µm. The mean fiber length is preferably in a range of 0.05 to 100 mm, more preferably in a range of 0.5 to 50 mm, even more preferably in a range of 1 to 25 mm, and particularly preferably in a range of 2 to 15 mm. When the mean fiber length is in the range described above, the laminated body including the resin layer containing the resin composition has better mechanical strength (e.g., flexural strength) and excellent heat resistance. Without being bound by any particular theory, it is considered that, when the mean fiber length is in the range described above, the advantages described above can be achieved because the fibers (C) described above tends to be oriented in the resin layer. As long as the mean fiber length is in the range described above, a longer mean fiber length tends to achieve superior mechanical strength and heat resistance.

In a case where a plurality of types of fibers are employed, the average fiber diameter and the mean fiber length of at least one type of the fibers are only required to be in the range described above.

The mean fiber length of the fibers (C) contained in the resin composition may vary depending on the method for producing the laminated body. For example, in a case where the injection molding described below is employed, the resin composition is heated and melted, thus the fibers are broken, and the mean fiber length tends to decrease. The mean fiber length described above means a mean fiber length in the resin composition, and is a fiber length before undergoing a thermal history. Thus, the mean fiber length of the fibers in the laminated body produced by a method such as injection molding is preferably in a range of 0.05 to 50 mm, more preferably in a range of 0.25 to 25 mm, even more preferably in a range of 0.5 to 15 mm, and particularly preferably in a range of 1 to 10 mm.

Meanwhile, when the laminated body is produced by a lamination method, the mean fiber length of the fibers (C) in the resin composition and the mean fiber length of the fibers (C) in the laminated body do not change.

The fiber diameter can be measured by using an optical microscope, and the average fiber diameter can be determined by, for example, measuring the fiber diameters of randomly selected 10 fibers and calculating the average value thereof. The fiber length can be measured by using a ruler, a vernier caliper, or the like based on an image magnified by a microscope as necessary. The mean fiber length can be determined by, for example, measuring the fiber lengths of randomly selected 10 fibers and calculating the average value thereof.

### Content of Fibers (C)

In the present embodiment, the content of the fibers in the resin composition is not particularly limited, but is preferably in a range of 3 to 60 mass%. When the content of the fibers is 3 mass% or more, the strength, rigidity, and impact resistance of the laminated body can be ensured. Meanwhile, when the content of the fibers is 60 mass% or less, the laminated body can be readily produced or processed. When the content of the fibers is 60 mass% or less, the specific gravity becomes small, which is advantageous in terms of a greater weight reduction effect as a metal substitute.

From the viewpoints described above, the content of the fibers in the resin composition of the present embodiment is more preferably from 10 to 50 mass%, even more preferably from 20 to 45 mass%, and yet even more preferably from 25 to 40 mass%.

### Glass Fibers

Glass fibers are an example of the inorganic fibers (C) suitable for the laminated body according to the present embodiment. The glass fibers may be, for example, long fibers having a mean fiber length of 30 mm or more, or may be fibers having a short mean fiber length (chopped strand).

More specifically, the mean fiber length is preferably in a range of 0.05 to 100 mm. When the mean fiber length is in the range described above, the laminated body has good strength and impact resistance. From the viewpoints described above, the mean fiber length is more preferably in a range of 0.5 to 50 mm, even more preferably in a range of 1 to 25 mm, and particularly preferably in a range of 2 to 15 mm. In the case of the glass fibers as the fibers (C) in the laminated body produced by a method such as injection molding, the mean fiber length thereof is preferably in a range of 0.05 to 50 mm, more preferably in a range of 0.25 to 25 mm, even more preferably in a range of 0.5 to 15 mm, and particularly preferably in a range of 1 to 10 mm.

The upper limit of the mean fiber length of the glass fibers is not particularly limited. For example, in the case where a pellet produced by a pultrusion method using the glass fibers is used, the length of the pellet corresponds to the fiber length of the glass fibers, and thus the mean fiber length is up to approximately 20 mm. In the case of a swirl mat using long glass fibers, the length of the glass fibers of a roving used in the production is the longest fiber length, which is approximately 17000 m (17 km). When the glass fibers are cut so as to correspond to the size of the laminated body, the cut length is the longest fiber length.

The average fiber diameter of the glass fibers is preferably in a range of 9 to 25 µm. When the average fiber diameter is 9 µm or more, the laminated body has adequate rigidity and impact resistance, whereas when the average fiber diameter is 25 µm or less, the laminated body has good strength. From the viewpoints described above, the average fiber diameter of the glass fibers is more preferably in a range of 10 to 15 µm.

The average fiber diameter and the mean fiber length of the glass fibers can be measured by the methods described above.

The material of the glass fibers used in the present embodiment is not particularly limited, and may be alkali-free glass, low-alkali glass, or alkali-containing glass. The glass fibers used may be one having any composition that has been used as glass fibers.

### Alumina Fibers

Alumina fibers are an example of the fibers (C) suitable for the laminated body according to the present embodiment. The alumina fibers are fibers typically made of alumina and silica. In the laminated body of the present invention, the compositional ratio (mass ratio) of alumina/silica in the alumina fibers is preferably in a range of 65/35 to 98/2, which is called mullite composition or high-alumina composition, more preferably in a range of 70/30 to 95/5, and particularly preferably in a range of 70/30 to 74/26.

The average fiber diameter of the alumina fibers is preferably in a range of 3 to 25 µm, and the alumina fibers preferably contains substantially no fiber having a fiber diameter of 3 µm or less. As used herein, the phrase "contain substantially no fiber having a fiber diameter of 3 µm or less" means that the amount of fibers having a fiber diameter of less than 3 µm is 0.1 mass% or less relative to the entire mass of the inorganic fibers. When the average fiber diameter is 3 µm or more, the amount of dust floating in the air is reduced. Meanwhile, an average fiber diameter of 25 µm or less is preferred from the viewpoint of the rigidity and impact resistance of the laminated body.

The alumina fibers preferably have a mean fiber length in a range of 0.05 to 100 mm. When the mean fiber length is in the range described above, the laminated body has good strength and impact resistance. From the viewpoints described above, the mean fiber length is more preferably in a range of 0.5 to 50 mm, even more preferably in a range of 1 to 25 mm, and particularly preferably in a range of 2 to 15 mm. In the case of using the alumina fibers as the fibers (C) in the laminated body produced by a method such as injection molding, the mean fiber length thereof is preferably in a range of 0.05 to 50 mm, more preferably in a range of 0.25 to 25 mm, even more preferably in a range of 0.5 to 15 mm, and particularly preferably in a range of 1 to 10 mm.

### Carbon Fibers

The preferred ranges of the average fiber diameter and the mean fiber length of the carbon fibers are same as those for the glass fibers.

The carbon fibers may be incorporated to impart electromagnetic wave shielding properties.

### (D) Dispersant

In the present embodiment, the resin composition forming the resin layer preferably contains a dispersant (D) in addition to the components (A) to (C) described above. The dispersant (D) is not particularly limited, as long as it can disperse the flame retardant (B) in the thermoplastic resin (A). From the viewpoint of compatibility with the thermoplastic resin (A), a polymer dispersant can be suitably used. Preferably, a dispersant capable of dispersing the flame retardant (B) in the polypropylene-based resin (A-1) can be used. The polymer dispersant is preferably a polymer dispersant having a functional group, and is preferably a polymer dispersant having a functional group such as a carboxyl group, a phosphate group, a sulfonate group, a primary, secondary, or tertiary amino group, a quaternary ammonium salt group, or a group derived from a nitrogen-containing heterocyclic compound such as pyridine, pyrimidine, or pyrazine, from the viewpoint of dispersion stability.

In the present embodiment, a polymer dispersant having a carboxyl group is preferred. In particular, in the case of using a phosphorus-based flame retardant suitable as a flame retardant, a copolymer of an α-olefin and an unsaturated carboxylic acid is preferred. By using such a dispersant, the dispersibility of the phosphorus-based flame retardant can be improved, and the content of the flame retardant can be reduced.

### Copolymer of α-Olefin and Unsaturated Carboxylic Acid

In the present embodiment, the proportion of the α-olefin unit is preferably 20 mol% or more and 80 mol% or less per 100 mol% of the total of the α-olefin unit and the unsaturated carboxylic acid unit in the "copolymer of an α-olefin and an unsaturated carboxylic acid" described above (hereinafter referred to as "copolymer (D1)").

In the copolymer (D1), the proportion of the α-olefin unit relative to the total amount of the α-olefin unit and the unsaturated carboxylic acid unit is more preferably 30 mol% or more, and is more preferably 70 mol% or less. When the proportion of the α-olefin is equal to or higher than the lower limit described above, better compatibility with the thermoplastic resin (A) such as a polyolefin-based resin is achieved. When the proportion is equal to or lower than the upper limit described above, better compatibility with the flame retardant (B) is achieved.

In the copolymer (D1), the α-olefin is preferably an α-olefin having 5 or more carbons, and more preferably an α-olefin having 10 or more and 80 or less carbons. When the number of carbons of the α-olefin is 5 or more, compatibility with the thermoplastic resin (A) tends to be better, whereas when the number of carbons is 80 or less, an advantage is achieved in terms of raw material cost. From the viewpoints described above, the number of carbons of the α-olefin is more preferably 12 or more and 70 or less, more preferably 15 or more and 65 or less, and particularly preferably 18 or more and 60 or less.

In the copolymer (D1), examples of the unsaturated carboxylic acid include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, norborna-5-ene-2,3-dicarboxylic acid, and an ester, anhydride, or imide of such an unsaturated carboxylic acid. The term "(meth)acrylic acid" indicates an acrylic acid or a methacrylic acid.

Specific examples of the ester, anhydride, or imide of an unsaturated carboxylic acid include (meth)acrylates such as methyl (meth)acrylate, ethyl (meth)acrylate, butyl (meth)acrylate, 2-ethylhexyl (meth)acrylate, and glycidyl (meth)acrylate; dicarboxylic anhydrides such as maleic anhydride, itaconic anhydride, citraconic anhydride, and 5-norbornene-2,3-dicarboxylic anhydride; and maleimide compounds such as maleimide, N-ethylmaleimide, and N-phenylmaleimide. One of these may be used alone, or two or more of these may be used in combination.

Among the compounds described above, esters and dicarboxylic anhydrides are preferred from the viewpoint of copolymerization reactivity. Among these, dicarboxylic anhydrides are preferred, and maleic anhydride is particularly preferred, from the viewpoint of compatibility with a phosphorus-based flame retardant suitable as a flame retardant.

The weight average molecular weight of the copolymer (D1) is preferably 2000 or more, and more preferably 3000 or more, and is preferably 50000 or less, and more preferably 30000 or less. When the weight average molecular weight of the copolymer (D1) is in the range described above, better dispersibility of the flame retardant (B) is achieved.

The weight average molecular weight of the copolymer (D1) is a value in terms of standard polystyrene as measured by dissolving the copolymer (D1) in tetrahydrofuran (THF) and subjecting the solution to gel permeation chromatography.

Examples of commercially available products of the copolymer (D1) include Licolub CE2 (available from Clariant Japan) and DIACARNA 30M (available from Mitsubishi Chemical Corporation).

In the present embodiment, the content of the dispersant (D) per 100 parts by mass of the flame retardant (B) in the resin composition is preferably in a range of 0.1 to 25 parts by mass, more preferably in a range of 1 to 10 parts by mass, and even more preferably in a range of 2 to 5 parts by mass.

When the content of the dispersant (D) is equal to or higher than the lower limit described above, dispersion of the flame retardant (B) becomes adequate, and good fire blocking performance is likely to be achieved. Meanwhile, when the content of the dispersant (D) is equal to or lower than the upper limit described above, the mechanical properties of the laminated body are maintained.

The proportion of the dispersant (D) is preferably 0.01 parts by mass or more, more preferably 0.05 parts by mass or more, and even more preferably 0.1 parts by mass or more, per 100 parts by mass of the total amount of the thermoplastic resin (A) and the flame retardant (B). Meanwhile, the proportion of the dispersant (D) is preferably 10 parts by mass or less, more preferably 5.0 parts by mass or less, even more preferably 2.0 parts by mass or less, yet even more preferably 1.5 parts by mass or less, and yet even more preferably 1.0 part by mass or less. When the proportion of the dispersant (D) is equal to or higher than the lower limit described above, the flame retardant (B) is more suitably dispersed, and the fire blocking performance, physical properties, and appearance of the laminated body are improved. When the proportion of the dispersant (D) is equal to or lower than the upper limit described above, the effect of the dispersant (D) on the fire blocking performance of the laminated body can be further suppressed.

The proportion of the dispersant (D) per 100 parts by mass of the fibers (C) is preferably 0.01 parts by mass or more, more preferably 0.05 parts by mass or more, even more preferably 0.1 parts by mass or more, yet even more preferably 0.5 parts by mass or more, and particularly preferably 1.0 part by mass or more. Meanwhile, the proportion of the dispersant (D) is preferably 10 parts by mass or less, more preferably 5.0 parts by mass or less, and even more preferably 2.0 parts by mass or less. When the proportion of the dispersant (D) is equal to or higher than the lower limit described above, the resulting laminated body has better fire blocking performance and physical properties, and the resulting molded article has better appearance. When the proportion of the dispersant (D) is equal to or lower than the upper limit described above, the effect of the dispersant (D) on the fire blocking performance of the laminated body can be further suppressed.

### Optional Additive Component

In the present embodiment, the resin composition may contain an optional additive component in addition to the components described above for the purpose of imparting other effects, such as further improvement of the effects of the present invention, as long as the effects of the present invention are not significantly impaired.

Specific examples of the optional additive component include a colorant, a photostabilizer, a UV absorber, a nucleating agent such as a sorbitol-based nucleating agent, an antioxidant, an antistatic agent, a neutralizer such as an inorganic compound, an antimicrobial or antifungal agent such as a thiazole-based antimicrobial or antifungal agent, a flame retardant or flame retardant aid such as a halogen compound or lignophenol, a plasticizer, a dispersant such as an organometallic salt-based dispersant, a lubricant such as a fatty acid amide-based lubricant, a metal deactivator such as a nitrogen compound, a polyolefin resin other than the polypropylene-based resin described above, a thermoplastic resin such as a polyamide resin or a polyester resin, and an elastomer (rubber component) such as an olefin-based elastomer or a styrene-based elastomer.

Two or more of these optional additive components may be used in combination.

The colorant, for example, an inorganic or organic pigment is effective in imparting or improving the colored appearance, good appearance, texture, commercial value, weatherability, and durability of the resin composition described above and the laminated body including a resin layer made of the resin composition.

Specific examples of the inorganic pigment include carbon black such as furnace carbon or Ketjen carbon; titanium oxide; iron oxide (e.g., red iron oxide); chromic acid (e.g., chrome yellow); molybdic acid; selenium sulfide; and ferrocyanide. Examples of the organic pigment include azo-based pigments such as poorly-soluble azo lake, soluble azo lake, insoluble azo lake, condensation azo chelate, and other azo chelate; phthalocyanine-based pigments such as phthalocyanine blue and phthalocyanine green; threne-based pigments such as anthraquinone, perynone, perylene, and thioindigo; lake dye; quinacridone-based pigments; dioxazine-based pigments; and isoindolinone-based pigments. An aluminum flake or a pearl pigment may be contained for achieving a metallic tone or a pearl tone. A dye can also be contained.

The photostabilizer or the UV absorber, for example, a hindered amine compound, a benzotriazole-based compound, a benzophenone-based compound, or a salicylate-based compound is effective for imparting or improving the weatherability and durability of the resin composition described above and the laminated body including a resin layer made of the resin composition, and is effective for further improving the weather discoloration resistance.

Specific examples of the hindered amine compound include a condensation product of
dimethyl succinate and 1-(2-hydroxyethyl)-4-hydroxy-2,2,6,6-tetramethylpiperidine;
poly[[6-(1,1,3,3-tetramethylbutyl)imino-1,3,5-triazine-2,4-diyl][(2,2,6,6-tetramethyl-4-piperidyl) imino]hexamethylene[(2,2,6,6-tetramethyl-4-piperidyl)imino]];
tetrakis(2,2,6,6-tetramethyl-4-piperidyl)-1,2,3,4-butanetetracarboxylate;
tetrakis(1,2,2,6,6-pentamethyl-4-piperidyl)-1,2,3,4-butanetetracarboxylate;
bis(1,2,2,6,6-pentamethyl-4-piperidyl)sebacate; and bis-2,2,6,6-tetramethyl-4-piperidylsebacate. Specific examples of the benzotriazole-based compound include
2-(2'-hydroxy-3',5'-di-t-butylphenyl)-5-chlorobenzotriazole; and
2-(2'-hydroxy-3'-t-butyl-5'-methylphenyl)-5-chlorobenzotriazole. Specific examples of the benzophenone-based compound include 2-hydroxy-4-methoxybenzophenone; and
2-hydroxy-4-n-octoxybenzophenone. Specific examples of the salicylate-based compound include 4-t-butylphenylsalicylate; and 2,4-di-t-butylphenyl-3',5'-di-t-butyl-4'-hydroxybenzoate.

Using the photostabilizer and the UV absorber in combination is preferred because the method exhibits a high effect of improving weatherability, durability, and weather discoloration resistance.

The antioxidant, for example, a phenol-based, phosphorus-based, or sulfur-based antioxidant is effective for imparting or improving the thermal stability, processing stability, and heat aging resistance of a polypropylene-based resin composition and a molded article thereof.

The antistatic agent, for example, a nonionic or cationic antistatic agent is effective for imparting or improving the antistatic properties of the resin composition described above and the laminated body including a resin layer made of the resin composition.

Examples of the olefin-based elastomer include ethylene-α-olefin copolymer elastomers such as an ethylene-propylene copolymer elastomer (EPR), an ethylene-butene copolymer elastomer (EBR), an ethylene-hexene copolymer elastomer (EHR), and an ethylene-octene copolymer elastomer (EOR); ethylene-α-olefin-diene terpolymer elastomers such as an ethylene-propylene-ethylidene norbornene copolymer, an ethylene-propylene-butadiene copolymer, and an ethylene-propylene-isoprene copolymer; and a styrene-butadiene-styrene triblock copolymer elastomer (SBS).

Examples of the styrene-based elastomer include styrene-based elastomers such as a styrene-isoprene-styrene triblock copolymer elastomer (SIS), a styrene-ethylene-butylene copolymer elastomer (SEB), a styrene-ethylene-propylene copolymer elastomer (SEP), a styrene-ethylene-butylene-styrene copolymer elastomer (SEBS), a styrene-ethylene-butylene-ethylene copolymer elastomer (SEBC), a hydrogenated styrene-butadiene elastomer (HSBR), a styrene-ethylene-propylene-styrene copolymer elastomer (SEPS), a styrene-ethylene-ethylene-propylene-styrene copolymer elastomer (SEEPS), a styrene-butadiene-butylene-styrene copolymer elastomer (SBBS), a partially hydrogenated styrene-isoprene-styrene copolymer elastomer, and a partially hydrogenated styrene-isoprene-butadiene-styrene copolymer elastomer, and hydrogenated polymer-based elastomers such as an ethylene-ethylene-butylene-ethylene copolymer elastomer (CEBC).

In particular, the use of an ethylene-octene copolymer elastomer (EOR) and/or an ethylene-butene copolymer elastomer (EBR) is preferred, because the laminated body according to the present embodiment is readily provided with adequate flexibility, and the laminated body tends to have excellent impact resistance.

### Method for Producing Resin Composition

In the present embodiment, a known method can be used as the method for producing the resin composition described above, and the resin composition can be produced by combining, mixing, and melt-kneading the components described above.

The mixing is performed by using a mixer such as a tumbler, a V blender, or a ribbon blender, and the melt-kneading is performed by using a single screw extruder, a twin screw extruder, a Banbury mixer, a roller mixer, a Brabender plastograph, or a kneader. The melt-kneading is followed by granulation.

### Support Layer

The laminated body according to the present embodiment includes a support layer laminated on at least one surface of the resin layer described above.

The support layer is combined with the resin layer to provide the laminated body of the present invention with flame retardancy and fire blocking performance. From the viewpoint of exhibiting such an effect, the support layer is preferably a fiber layer made of fibers (X). In particular, the support layer is preferably a non-woven fabric layer composed of a non-woven fabric, a woven fabric layer composed of a woven fabric, or a knitted fabric layer composed of a knitted fabric.

In particular, the non-woven fabric is preferred from the viewpoint of facilitating interpenetration of a part of the resin layer into a surface of the support layer, and achieving better bonding, as compared with a woven fabric or a knitted fabric. Furthermore, the non-woven fabric is preferred from the viewpoint of no directional dependency of mechanical strength due to irregular orientation direction of the fibers in the non-woven fabric.

The thickness of the support layer is not particularly limited as long as the thickness of the laminated body can be made 0.5 mm or more, but the thickness of the support layer is preferably 0.01 mm or more. When the thickness of the support layer is 0.01 mm or more, good bonding with the resin layer is achieved, and the resin layer can be maintained even when the resin layer comes into contact with fire. From the viewpoints described above, the thickness of the support layer is more preferably 0.05 mm or more, and even more preferably 0.1 mm or more.

Meanwhile, the upper limit of the thickness of the support layer is preferably 5 mm or less, more preferably 2 mm or less, even more preferably 1 mm or less, and particularly preferably 0.5 mm or less, from the viewpoint of suppressing the weight of a molded article and from the viewpoint of cost.

The size of the fibers (X) forming the fiber layer is not limited as long as the effects of the present invention are achieved; however, the average diameter of the fibers is preferably in a range of 3 to 25 µm, and the mean fiber length is preferably in a range of 5 to 100 mm.

When the average fiber diameter is 3 µm or more, the fiber layer is readily handled during production, whereas when the average fiber diameter is 25 µm or less, breakage is less likely to occur. When the mean fiber length is 5 mm or more, the laminated body can be provided with fire blocking performance and can also be provided with adequate strength. Meanwhile, when the mean fiber length is 100 mm or less, breakage is less likely to occur. The fiber length can be measured by using a ruler, a vernier caliper, or the like based on an image magnified by a microscope as necessary. The mean fiber length can be determined by, for example, measuring the fiber lengths of randomly selected 10 fibers and calculating the average value thereof.

The fibers (X) forming the fiber layer are not particularly limited as long as the effects of the present invention are exhibited. Examples of the fibers (X) include inorganic fibers such as glass fibers, carbon fibers, boron fibers, ceramic fibers, metal fibers, and metal oxide fibers; and organic fibers such as aramid fibers and aromatic polyester fibers. Of these, inorganic fibers are preferred and, among these, glass fibers, ceramic fibers, metal fibers, and metal oxide fibers are preferred, and glass fibers are particularly preferred, from the viewpoint of achieving excellent fire blocking performance.

As described above, at least one selected from the group consisting of glass fibers and aramid fibers among the fibers is preferred. As described below, in the case where the laminated body is used in a battery pack, the laminated body is desired to have excellent fire blocking performance. In such a case, safety is required when fire comes into contact with the laminated body from the resin layer side. Both glass fibers and aramid fibers can withstand contact with fire from the resin layer side. The present inventors have found that, when glass fibers are selected, the laminated body withstands contact with fire also from the side of the support layer constituting the laminated body. Thus, the fibers (X) forming the fiber layer is more preferably glass fibers.

### Non-woven Fabric Layer

The non-woven fabric layer is made of a non-woven fabric. The fibers forming the non-woven fabric is not particularly limited as long as the effects of the present invention are exhibited. Examples of the fibers include inorganic fibers such as glass fibers, carbon fibers, boron fibers, ceramic fibers, metal fibers, and metal oxide fibers; and organic fibers such as aramid fibers and aromatic polyester fibers. Of these, inorganic fibers are preferred and, among these, glass fibers, ceramic fibers, metal fibers, and metal oxide fibers are preferred, and glass fibers are particularly preferred, from the viewpoint of achieving excellent fire blocking performance.

### Glass Fiber Non-Woven Fabric

Examples of the form of the glass fiber non-woven fabric suitably used in the present invention include a felt and blanket obtained by processing short fiber glass wool, a chopped strand mat obtained by processing continuous glass fiber, a swirl mat of continuous glass fiber, and a unidirectionally oriented mat. Among these, the use of a glass fiber mat obtained by needle-punching a swirl mat of continuous glass fiber is particularly preferred because the laminated body has excellent strength and impact resistance.

The glass fiber is the same as that described in the fibers (C) above.

The ceramic fibers are preferably fibers mainly composed of silica and alumina and, for example, silica:alumina is in a range of 40:60 to 0:100. Specifically, silica-alumina fibers, mullite fibers, or alumina fibers can be used.

The metal fibers are preferably fibers containing, as a main component, a metal material such as iron, copper, aluminum, nickel, tungsten, titanium, molybdenum, beryllium, or platinum. The metal fibers may further contain, as an alloy component, one or more of carbon, nitrogen, chromium, cobalt, gold, and silver in addition to the metals described above. From the viewpoint of excellent strength and corrosion resistance, fibers containing stainless steel, nickel, or titanium as a main component is particularly preferred.

The material of metal oxide fibers that can be used is, for example, an alkaline earth metal oxide such as magnesium oxide or calcium oxide; a metal oxide of group 4 element such as titanium oxide or zirconium oxide; an oxide of group 13 element such as alumina or indium oxide; an oxide of group 14 element such as silica, tin oxide, or lead oxide; or an oxide of group 15 element such as antimony oxide. Among these, oxide fibers of group 13 to group 15 elements are preferred, oxide fibers of group 13 elements are more preferred, and alumina fibers are particularly preferred, from the viewpoint of effectively achieving a high level of heat resistance.

The size of the fibers forming the non-woven fabric is not limited as long as the effects of the present invention are achieved; however, the average diameter of the fibers is preferably in a range of 3 to 25 µm, and the mean fiber length is preferably in a range of 5 to 100 mm.

When the average fiber diameter is 3 µm or more, the non-woven fabric is readily handled during production, whereas when the average fiber diameter is 25 µm or less, breakage is less likely to occur. When the mean fiber length is 5 mm or more, the laminated body can be provided with fire blocking performance and can also be provided with adequate strength. Meanwhile, when the mean fiber length is 100 mm or less, breakage is less likely to occur. From the viewpoints described above, the mean fiber length is more preferably in a range of 10 to 50 mm, and even more preferably in a range of 15 to 30 mm.

The mean fiber length can be measured by the method described above.

The basis weight (fiber amount per unit area) of the non-woven fabric is preferably in a range of 10 to 500 g/m². When the basis weight is 10 g/m² or more, the laminated body is provided with fire blocking performance and adequate strength. Meanwhile, when the basis weight is 500 g/m² or less, good bonding with the resin layer is achieved, the laminated body is provided with adequate fire blocking performance, and an excessive increase in the weight thereof is prevented. From the viewpoints described above, the basis weight is more preferably in a range of 20 to 300 g/m², even more preferably in a range of 30 to 150 g/m², and particularly preferably in a range of 35 to 100 g/m².

In the range of 35 to 100 g/m² described above, the basis weight is preferably from 35 to 75 g/m², more preferably from 35 to 70 g/m², and even more preferably from 35 to 45 g/m². Without being bound by any particular theory, it is considered that, when the basis weight is in a low range, the resin composition containing the flame retardant is readily interpenetrated from the resin layer, which leads to superior fire blocking performance as a whole.

The non-woven fabric can be produced by using a known method, for example, a dry method, a wet method, a spunbonding method, a melt plane method, or an air-laid method. The non-woven fabric fibers obtained by such a producing method can be bonded by using a known method such as a chemical bonding method, a thermal bonding method, a needle-punching method, or a hydroentangling method.

### Woven Fabric Layer

The woven fabric layer is made of a woven fabric. The fibers forming the woven fabric are not particularly limited as long as the effects of the present invention are exhibited, and the fibers used may be the same as that exemplified above in the non-woven fabric layer. Similar to the case of the non-woven fabric layer, inorganic fibers are preferred, and glass fibers are particularly preferred.

The size (average fiber diameter or mean fiber length) of the fibers forming the woven fabric and the basis weight thereof are also the same as those described above in the non-woven fabric layer.

The textile weave of the woven fabric made of the fibers described above is not particularly limited, and may be any of plain weave, twill weave, and sateen weave.

### Knitted Fabric Layer

The knitted fabric layer is made of a knitted fabric. The fibers forming the knitted fabric are not particularly limited as long as the effects of the present invention are exhibited, and the fibers used may be the same as that exemplified above in the non-woven fabric layer. Similar to the case of the non-woven fabric layer, inorganic fibers are preferred, and glass fibers are particularly preferred.

The size (average fiber diameter or mean fiber length) of the fibers forming the knitted fabric and the basis weight thereof are also the same as those described above in the non-woven fabric layer.

The stitch structure of the knitted fabric made of the fibers described above is not particularly limited, and may be any of rib stitch, garter stitch, and stockinette stitch.

### Method for Producing Laminated Body

The method for producing the laminated body according to the present embodiment is not particularly limited, and various known methods can be employed. Specific examples thereof include a method in which a resin layer and a support layer are formed in advance and then bonded together, and a method in which a support layer is set in a mold, and a resin composition for forming a resin layer is charged into the mold, followed by injection molding.

Examples of the bonding method include a method in which a resin sheet for forming a resin layer and a glass fiber non-woven fabric sheet for forming a support layer are prepared, and then these sheets are laminated, heated, and pressurized.

In a more specific method, a resin sheet and a glass fiber non-woven fabric sheet are subjected to press molding in a mold equipped with a heating device.

The heating temperature is preferably from 170 to 300°C. When the heating temperature is 170°C or higher, adequate bonding is achieved between the resin layer and the support layer, and the laminated body has improved fire blocking performance. Meanwhile, when the heating temperature is 300°C or lower, the resin composition forming the resin layer does not deteriorate.

The pressing pressure is preferably from 0.1 to 1 MPa. When the pressing pressure is 0.1 MPa or more, adequate bonding is achieved between the resin layer and the support layer, and the laminated body has improved fire blocking performance. Meanwhile, when the pressing pressure is 1 MPa or less, no burr occurs in the resin layer.

When the resin layer and the support layer are bonded to each other, an adhesive layer may be provided between the resin layer and the support layer. However, the resin layer and the support layer are preferably directly bonded without interposing another layer therebetween because the bonding between the resin layer and the support layer is important in the present invention.

The temperature during cooling is not particularly limited as long as the temperature is equal to or lower than the freezing point of the thermoplastic resin. When the cooling temperature is 80°C or lower, deformation does not occur when the resulting molded article is taken out. From the viewpoints described above, the cooling temperature is preferably from room temperature to 80°C.

The laminated body can also be produced by a lamination process in which a resin sheet and a glass fiber non-woven fabric sheet are heated and pressurized by passing the sheets through two pairs of rollers equipped with a heating device. The lamination process enables continuous production, and thus achieves good productivity, which is preferred.

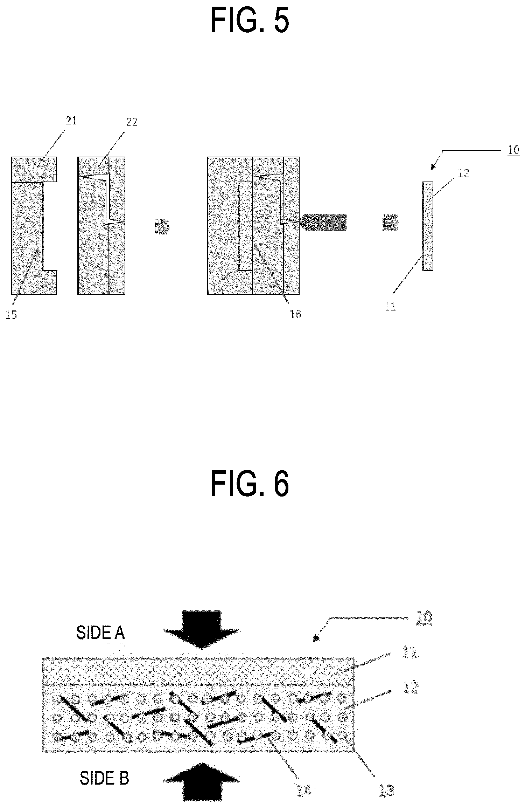

The method for producing the laminated body by injection molding may be, for example, a method illustrated in FIG. 5. Specifically, the method involves setting a glass non-woven fabric serving as a support layer 15 on a movable mold 21, engaging the movable mold 21 with a fixed mold 22, injecting a resin composition 16 into a cavity, and integrally molding the resin composition 16 and the glass non-woven fabric (support layer 15). This method can produce a laminated body 10 of the present invention in which the support layer 11 is laminated on one surface of the resin layer 12. When this injection molding method is used, the long fibers in the glass non-woven fabric are maintained without being broken, and thus the fire blocking performance of the laminated body according to the present embodiment can be further improved.

A preferred example of the method for producing the laminated body according to the present embodiment is the following method.

Specifically, the laminated body production method involves forming a support layer laminated on at least one surface of a resin layer by impregnating a support with a resin composition. The method of impregnating a support with a resin composition is not particularly limited, and the impregnation can be performed by a method in which a resin sheet and a support are subjected to press molding under heating in a mold equipped with a heating device, or a method in which a support is preliminarily disposed in a mold for injection molding, and then a resin is injected into the mold.

The thickness of the support before being impregnated with the resin composition is preferably from 0.01 to 30 mm. As described below, the thickness of the support used for the production of the laminated body may be different from the thickness of the support layer in the produced laminated body. This is because the support is compressed during the production process of the laminated body. Thus, the compression of the support is desirably taken into consideration for the production of the laminated body.

When the thickness of the support before being impregnated with the resin composition is in the range described above, excellent productivity of the laminated body is achieved, and the resulting laminated body has excellent fire blocking performance and strength. From the viewpoints described above, the thickness of the support is more preferably from 0.05 to 15 mm, even more preferably from 0.5 to 5 mm, and particularly preferably from 1 to 3 mm.

In the laminated body production method, the support compression ratio, which is defined by the ratio of the thickness of the support layer in the laminated body to the thickness of the support before being impregnated with the resin composition, is preferably from 15 to 75%. When the support compression ratio is in this range, excellent productivity of the laminated body is achieved, and the resulting laminated body has excellent fire blocking performance and strength. From the viewpoints described above, the support compression ratio is more preferably from 20 to 60%, even more preferably from 25 to 50%, and particularly preferably from 30 to 40%.

### Mechanism of Action for Fire Blocking

In the laminated body 10 according to the present embodiment, the resin layer 12 is held by the support layer 11 as illustrated in the schematic view of FIG. 2. Thus, when the resin layer comes into contact with fire, the resin layer is prevented from melting and dropping. It is considered that a char is stably formed in the resin layer through contact of a flame retardant 13 with fire. In this case, since the thickness of the resin layer is in a specific range relative to the thickness of the support layer, the resin layer adequately functions as a heat-insulating layer when comes into contact with fire, and the support layer can be effectively protected from a high temperature. Therefore, the temperature of the support layer does not increase to a softening point due to the heat-insulating effect of the char. Thus, the support layer can exist stably and maintains its effect of holding the resin layer. As a result, the fire probably does not penetrate through the laminated body for a long period of time.

In particular, it is considered that the flame retardant 13 is present in a uniformly dispersed state because the resin layer 12 contains the fibers 14 in the laminated body 10 according to the present embodiment. Since the flame retardant is uniformly dispersed in the resin between fibers, chars formed when the flame retardant comes into contact with fire are fixed in gaps between fibers. Furthermore, the sizes of chars formed through expansion when the flame retardant comes into contact with fire are limited by gaps between fibers, and thus the formed chars have a uniform size. It is considered that a combination of the fixation effect of chars by fibers and uniformizing of the sizes of chars by fibers enables formation of fine chars and significantly improves the fire blocking performance of the laminated body.

In particular, it is considered that when the ratio of the content of the dispersant to the content of the flame retardant is set to a specific range, the flame retardant can be controlled so as to be uniformly present in the resin between fibers, and the fire blocking performance of the laminated body can be significantly improved.

### Other Embodiments of Laminated Body

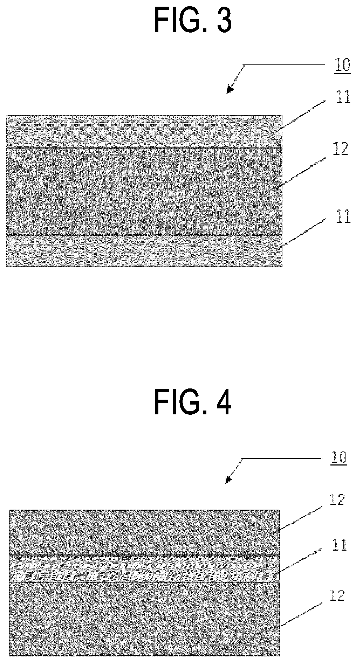

The laminated body of the present invention includes a resin layer and a support layer, and the support layer is only required to be disposed on one surface of the resin layer; however, as illustrated in FIG. 3, support layers 11 may be disposed on both surfaces of a resin layer 12. In the present embodiment, one support layer 11 comes into contact with fire, and the support layer 11 contacted with fire does not function as a support layer. However, the other support layer 11 functions as a support layer, and thus fire blocking performance is exhibited due to the same mechanism of action as that described above.

The present embodiment is preferred because both surfaces of the resin layer 12 have the support layers 11, and thus warpage does not occur in the laminated body.

In another embodiment, the laminated body 10 of the present invention may include two resin layers 12 that sandwich a support layer 11 as illustrated in FIG. 4. In the case of the present embodiment, the effects of the present invention are exhibited even when any of the upper surface and the lower surface comes into contact with fire.

In another embodiment (also referred to as "second embodiment") of the present invention, the laminated body described above preferably satisfies at least one of the following conditions (a1) and (b1).

Condition (a1): the minimum value of flexural modulus measured in accordance with JIS K7171 (ISO 178) is 1000 MPa or more.

Condition (b1): the minimum value of flexural strength measured in accordance with JIS K7171 (ISO 178) is 10 MPa or more.

The laminated body according to the second embodiment preferably satisfies either the condition (a1) or (b1) described above, and more preferably satisfies both the conditions (a1) and (b1).

When the laminated body satisfies at least one of the conditions (a1) and (b1) described above, the laminated body can be provided with adequate fire blocking performance. The minimum value of flexural modulus measured in accordance with JIS K7171 (ISO 178) refers to the smallest value among flexural moduli measured in any direction parallel to a plane of the laminated body. In general, the numerical value of flexural modulus varies depending on the direction of the measurement of the flexural modulus with respect to a plane of the laminated body. Typically, in many cases, the numerical value of flexural modulus measured in a machine direction of the resin layer forming the laminated body is the largest, and the numerical value of flexural modulus measured in a direction orthogonal to the machine direction is the smallest. Also, the numerical value of flexural modulus may vary depending on the direction in which a force is applied to the laminated body, i.e., test piece during the measurement. For example, there are a case where a force is applied to the resin layer side of the laminated body and a case where a force is applied to the support layer side of the laminated body. In such a case, the minimum value of flexural modulus is the smallest value of flexural moduli as measured when a force is applied in any direction.

Similar to the case of the flexural modulus, the minimum value of flexural strength refers to the smallest value of flexural strengths measured in any direction parallel to a plane of the laminated body.

The laminated body of the second embodiment preferably satisfies the condition (a1) described above. That is, the minimum value of flexural modulus measured in accordance with JIS K7171 (ISO 178) is preferably 1000 MPa or more. In this case, the laminated body can be provided with adequate fire blocking performance. From the viewpoints described above, the minimum value of flexural modulus is more preferably 2000 MPa or more, even more preferably 2500 MPa or more, and particularly preferably 3000 MPa or more (condition (a2)).

In the laminated body of the second embodiment, the average of the numerical value of flexural modulus measured in a machine direction of the resin and the numerical value of flexural modulus measured in a direction orthogonal to the machine direction is preferably 3000 MPa or more (condition (a3)) from the viewpoint of enhancing the fire blocking performance of the laminated body. Particularly preferably, the condition (a1) described above and the condition (a3) are satisfied. The average of the flexural modulus in the machine direction and the flexural modulus in a direction orthogonal to the machine direction is more preferably 4000 MPa or more, and even more preferably 5000 MPa or more. Meanwhile, the upper limit is generally 10 GPa or less. The machine direction of the resin can be determined by observation of a cross section of the laminated body.

Also, the laminated body of the second embodiment preferably satisfies the condition (b1) described above. That is, the minimum value of flexural strength measured in accordance with JIS K7171 (ISO 178) is preferably 10 MPa or more. In this case, the laminated body can be provided with adequate fire blocking performance. From the viewpoints described above, the minimum value of flexural modulus is more preferably 20 MPa or more, even more preferably 2500 MPa or more, and particularly preferably 30 MPa or more (condition (b2)).

In the laminated body of the second embodiment, the average of the numerical value of flexural strength measured in a machine direction of the resin and the numerical value of flexural strength measured in a direction orthogonal to the machine direction is preferably 30 MPa or more (condition (b3)) from the viewpoint of enhancing the fire blocking performance of the laminated body. Particularly preferably, the condition (b1) described above and the condition (b3) are satisfied. The average of the flexural modulus in the machine direction and the flexural modulus in a direction orthogonal to the machine direction is more preferably 50 MPa or more, and even more preferably 80 MPa or more. Meanwhile, the upper limit is generally 1000 MPa or less. As described above, the machine direction of the resin can be determined by observation of a cross section of the laminated body.

In the laminated body according to the second embodiment, the ratio of, when a force is applied to one surface, the average of the numerical value of flexural strength measured in the machine direction of the resin and the numerical value of flexural strength measured in a direction orthogonal to the machine direction, to when a force is applied to the opposite surface, the average of the numerical value of flexural strength measured in the machine direction of the resin and the numerical value of flexural strength measured in a direction orthogonal to the machine direction, is preferably 105% or more from the viewpoint of enhancing the fire blocking performance of the laminated body. The ratio described above is more preferably 110% or more and generally 300% or less.

In the laminated body according to the second embodiment, the average of, when a force is applied to a surface on the resin layer side, the numerical value of flexural strength measured in the machine direction of the resin and the numerical value of flexural strength measured in a direction orthogonal to the machine direction is preferably larger than the average of, when a force is applied to a surface on the support layer side, the numerical value of flexural strength measured in the machine direction of the resin and the numerical value of flexural strength measured in a direction orthogonal to the machine direction, from the viewpoint of enhancing the fire blocking performance of the laminated body.

In the laminated body according to the second embodiment, the ratio of, when a force is applied to one surface, the average of the numerical value of flexural strength measured in the machine direction of the resin and the numerical value of flexural modulus measured in a direction orthogonal to the machine direction to when a force is applied to the opposite surface, the average of the numerical value of flexural modulus measured in the machine direction of the resin and the numerical value of flexural strength measured in a direction orthogonal to the machine direction, is preferably more than 100% from the viewpoint of enhancing the fire blocking performance of the laminated body. The ratio described above is more preferably 102% or more, and even more preferably 105% or more, and generally 300% or less.

In the laminated body according to the second embodiment, the average of, when a force is applied to a surface on the resin layer side, the numerical value of flexural modulus measured in the machine direction of the resin and the numerical value of flexural modulus measured in a direction orthogonal to the machine direction is preferably larger than the average of when a force is applied to a surface on the support layer side, the numerical value of flexural modulus measured in the machine direction of the resin and the numerical value of flexural modulus measured in a direction orthogonal to the machine direction, from the viewpoint of enhancing the fire blocking performance of the laminated body.

### Application

Examples of the application of the laminated body of the present invention include various parts in industrial fields, such as automobile parts and electrical and electronic device parts. Because the laminated body has particularly high flame retardancy and excellent fire blocking performance, the laminated body is suitably used for, for example, various housings and casings, such as a battery case.

The laminated body is particularly preferably used as a battery case, and the battery is not particularly limited. Examples of the battery include secondary batteries such as a lithium ion battery, a nickel-hydrogen battery, a lithium-sulfur battery, a nickel-cadmium battery, a nickel-iron battery, a nickel-zinc battery, a sodium-sulfur battery, a lead storage battery, and an air battery. Among these, a lithium ion battery is preferred. In particular, the laminated body is suitably use for suppressing the thermal runaway of the lithium ion battery.

Also, the laminated body is useful for electric mobility such as vehicles, ships, airplanes, and other transportation equipment that operate on electricity as an energy source. The vehicles include electric vehicles (EV) and hybrid cars.

Structures using the laminated body of the present invention, such as a battery housing and a battery including a battery cell have high safety, and such structures are very useful for electric mobility using a battery module having a high energy density to increase the driving range.

### Battery Housing

A preferred embodiment of a battery housing, which is one of the applications described above (hereinafter also referred to as "third embodiment") will be described below in detail.

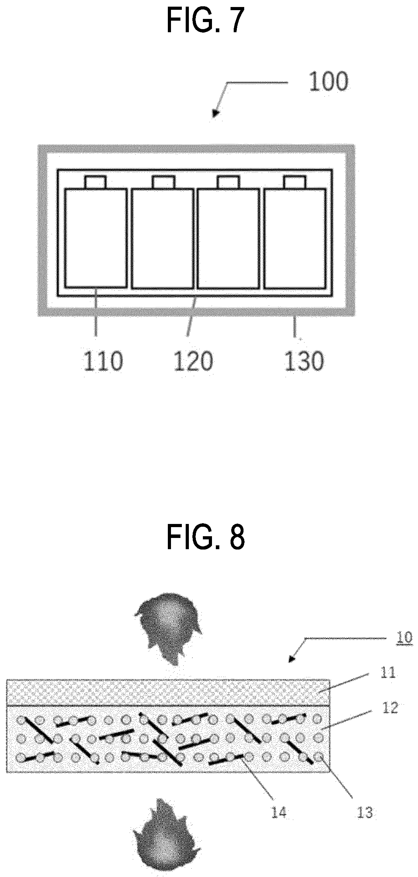

FIG. 7 is a conceptual diagram illustrating the structure of a battery including a battery housing. A battery 100 includes a battery module 110, which is an assembly of battery cells (unit cells); a battery pack 120, which is an assembly of battery modules; and a battery housing 130 for storing a battery component such as a battery pack.

The battery housing 130 of the third embodiment is made of a laminated body 10 including a resin layer 12 containing a flame retardant, and a support layer 11 laminated on at least one surface of the resin layer as illustrated in the schematic view of FIG. 1. The resin layer 12 and the support layer 11 are arranged in this order from the battery storage unit side, i.e., the battery pack 120 side.

In the battery housing of the third embodiment, the resin layer 12 is located on the battery storage unit side as described above. Thus, when the battery module 110 ignites, the resin layer 12 comes into contact with fire. The mechanism of action of the battery housing of the third embodiment for blocking fire is as described above in the section of the resin composition. The resin layer 12 in the battery housing of the third embodiment contains a flame retardant 13 and preferably contains fibers 14.

The battery pack of the third embodiment is made of the laminated body 10, and the resin layer 12 is held by the support layer 11 as illustrated in the schematic view of FIG. 1. Thus, as described above, it is considered that when the resin layer 12 comes into contact with fire, the resin layer is prevented from melting and dropping, and a char is stably formed in the resin layer through contact of the flame retardant 13 with fire. When the resin layer and the support layer are arranged in this order from the battery storage unit side, in case of abnormal ignition of the battery, the resin layer comes into contact with fire earlier than the support layer. In this case, the resin layer adequately functions as a heat-insulating layer when comes into contact with fire, and the support layer can be effectively protected from high temperature. Therefore, the temperature of the support layer does not increase to a softening point due to the heat-insulating effect of the char. Thus, the support layer can exist stably, and maintains its effect of holding the resin layer. As a result, the fire probably does not penetrate through the laminated body for a long period of time.

In particular, it is considered that the flame retardant 13 is present in a uniformly dispersed state because the resin layer 12 contains the fibers 14 in the laminated body 10 according to a preferred embodiment. Since the flame retardant is uniformly dispersed in the resin between fibers, chars formed when the flame retardant comes into contact with fire are fixed in gaps between fibers. Furthermore, the sizes of chars formed through expansion when the flame retardant comes into contact with fire are limited by gaps between fibers, and thus the formed chars have a uniform size. It is considered that a combination of the fixation effect of chars by fibers and uniformizing of the sizes of chars by fibers enables formation of fine chars and significantly improves the fire blocking performance of the laminated body. In particular, it is considered that when the ratio of the content of the dispersant to the content of the flame retardant is set to a specific range, the flame retardant can be controlled so as to be uniformly present in the resin between fibers, and the fire blocking performance of the laminated body can be significantly improved.

As described above, since the resin layer and the support layer are arranged in this order from the battery storage unit side, the battery housing of the third embodiment has a fire blocking effect.

The mechanism of action of the battery housing of the third embodiment for blocking fire is presumed as described above. Thus, when the battery housing of the third embodiment comes into contact with fire, the resin layer preferably functions as a flame-retardant heat-insulating layer.

### Other Embodiments of Laminated Body

As described above, in the laminated body 10 constituting the battery housing, the support layer is only required to be disposed on one surface of the resin layer. However, as illustrated in FIG. 3, support layers 11 may be disposed on both surfaces of the resin layer 12. Since both surfaces of the resin layer 12 have the support layers 11, warpage does not occur in the laminated body, which is preferred.

In another embodiment, the laminated body 10 constituting the battery housing may include two resin layers 12 that sandwich a support layer 11 as illustrated in FIG. 4. In the case of the present embodiment, the effects of the present invention are exhibited even when any of the upper surface and the lower surface comes into contact with fire. Thus, it is not necessary to determine the front or back of the laminated body during production of the battery housing.

### EXAMPLES

The present invention will next be described in detail by way of Examples, but the present invention is not limited by these Examples.

### Evaluation Method

### Evaluation of Fire Blocking Performance (1)

For the laminated body (injection test piece) prepared in each of Examples and Comparative Example, a flame of 1200°C from a burner was applied to the surface on the resin layer 12 side as illustrated in FIG. 2, to determine whether the flame penetrated the laminated body after the elapse of 15 minutes for evaluation. The evaluation criteria are as follows. A sample for evaluation described below was used as the injection test piece.

### Evaluation Criteria

A: The flame did not penetrate.
B: The flame penetrated.

### Evaluation of Fire Blocking Performance (2)

For the laminated body (injection test piece) prepared in each of Examples and Comparative Example, a flame of 1200°C from a burner was applied to the surface on the resin layer 12 side as illustrated in FIG. 2, and the temperature of the back surface was measured after the elapse of 15 minutes.

### Evaluation of Fire Blocking Performance (3)

For the laminated body (injection test piece) prepared in each of Examples and Comparative Example, flame contact evaluation was performed as described below. A sample for evaluation described below was used as the injection test piece.
(i) As illustrated in FIG. 8, a flame of 1200°C from a burner was applied to the surface on the resin layer 12 side, to determine whether the flame penetrated the laminated body after the elapse of 15 minutes for evaluation. The evaluation criteria are as follows.
(ii) As illustrated in FIG. 8, a flame of 1200°C from a burner was applied to the surface on the support layer 11 side, to determine whether the flame penetrated the laminated body after the elapse of 15 minutes for evaluation. The evaluation criteria are as follows.

### Evaluation Criteria

A: The flame did not penetrate.
B: The flame penetrated.

### Evaluation of Flexural Modulus and Flexural Strength

The laminated body prepared in each of Examples and Comparative Example was cut into a piece in a machine direction (MD) or a direction orthogonal to the machine direction (TD) by using a circular saw, and the end faces of the piece were processed with a polishing machine, to prepare a test piece in each direction (length × width × thickness: 40 mm × 25 mm × 2 mm). Hereinafter, a test piece cut in the MD will be referred to as a MD test piece, and a test piece cut in the TD will be referred to as a TD test piece. In the MD test piece, the machine direction of the test piece is a longitudinal direction. In the TD test piece, the direction orthogonal to the machine direction is a longitudinal direction of the test piece.

For the test piece described above, the flexural modulus and the flexural strength were measured in accordance with JIS K7171 by using "2050 Universal Testing Machine" available from INTESCO Co., Ltd. under the conditions described below. The measurement was conducted in the case where pressing was performed on the support layer side (non-woven fabric side, side A in FIG. 6) of the laminated body, and in the case where pressing was performed on the resin layer side (side opposite to the non-woven fabric side, side B in FIG. 6) of the laminated body. The measurement was conducted five times for each of these cases, to determine an average value.

### Measurement Conditions

Test environment: temperature of 23 ± 2°C, relative humidity of 50% ± 10%
(The measurement was conducted after adjustment of the condition of the test piece in the aforementioned environment for 24 hours or more.)
Test rate: 2 mm/min
Distance between fulcrums: 32 mm

### (1) Preparation of Resin Composition

The following materials were provided as raw materials of a resin composition.

### (a) Polypropylene-Based Resin (component (A))

"NOVATEC (registered trademark) BC03B", available from Japan Polypropylene Corporation (melt flow rate: 30 g/10 min)

"NOVATEC (registered trademark) BC05B", available from Japan Polypropylene Corporation (melt flow rate: 50 g/10 min)

### (b) Flame Retardant (component (B))

Phosphorus-based flame retardant (ADK STAB FP-2500S, non-halogen intumescent flame retardant, available from ADEKA CORPORATION)

### (c) Dispersant (component (D))

α-Olefin-maleic anhydride copolymer (DIACARNA 30M, available from Mitsubishi Chemical Corporation, weight average molecular weight: 7800)

### (d) Antioxidant

(d-1) Phenol-based antioxidant (ADK STAB AO-60, available from ADEKA CORPORATION)
(d-2) Phosphite-based antioxidant (ADK STAB 2112, available from ADEKA CORPORATION)

### (e) Glass fiber-reinforced thermoplastic resin (GF-reinforced resin, component (A) + component (C))

"FUNCSTER (registered trademark)" available from Japan Polypropylene Corporation (polypropylene-based resin/glass fiber = 50/50, pellet length: 10 mm)

The polypropylene-based resin (a), flame retardant (b), dispersant (c), antioxidant (d), and GF-reinforced resin (e) described above were mixed so that the proportions of these components were as shown in Table 1 below, to prepare a resin composition. Note that, although it is not described in Table 1, a proportion of each of the phenol-based antioxidant (d-1) and the phosphite-based antioxidant (d-2) was 0.007 parts by mass with respect to 100 parts by mass of the resin composition described above.

### [Table 1]

**Table 1**

| | Polypropylene component (A) | Glass fiber component (C) | Flame retardant component (B) | Dispersant component (D) |
|---|---|---|---|---|
| Composition of resin composition (parts by mass) | 54.5 | 30 | 15 | 0.5 |

### (2) Raw Material of Laminated Body

The following materials were prepared as raw materials of a laminated body.

### (f) Support Layer

(f-1) Glass non-woven fabric (GMC-50G, available from Oji F-Tex Co., Ltd.; basis weight: 50 g/m²; thickness: 0.36 mm)
(f-2) Glass non-woven fabric (GMC-75G, available from Oji F-Tex Co., Ltd.; basis weight: 75 g/m²; thickness: 0.53 mm)
(f-3) Glass non-woven fabric (FAP-035, available from Oribest Co., Ltd.; basis weight: 35 g/m²; thickness: 0.26 mm)
(f-4) Aramid non-woven fabric (APT36, available from Oji F-Tex Co., Ltd.; basis weight: 36 g/m²; thickness: 0.50 mm)

### Examples 1 and 6

The resin composition prepared in (1) described above was laminated on a support layer (f) by using an injection molding machine "FANUC ROBOSHOT α-S300iA" available from Fanuc Corporation, to produce a sample for evaluation of flame retardancy.

Specifically, a glass non-woven fabric (f-1) was preliminarily disposed in a mold, and the resin composition having the formulation shown in Table 1 was injection-molded onto the glass non-woven fabric, to prepare a test piece (1) of 200 mm in length × 200 mm in width × 2.0 mm in thickness and a test piece (2) of 200 mm in length × 200 mm in width × 3.5 mm in thickness. The final formulations are shown in Table 2-1 and Table 2-2. The glass fibers in Table 2-1 and Table 2-2 include the glass fibers derived from the support layer (f-1).

For example, the thickness of the resin layer of the sample for evaluation (laminated body) prepared in Example 1 was 1.86 mm, and the thickness of the non-woven fabric layer (support layer) was 0.14 mm. Thus, the thickness of the resin layer was 13.3 times the thickness of the support layer. The thicknesses of the resin layer and the support layer of the sample for evaluation in the other Example are as shown in Table 2-2. In Example 1, the evaluation of fire blocking performance (3) was also performed. The results are also shown together.

The results of fire blocking performance evaluation performed on the prepared samples for evaluation are shown in Table 2-1 and Table 2-2. The main molding conditions are as follows.
1) Temperature conditions: cylinder temperature (220°C), mold temperature (60°C)
2) Injection conditions: injection pressure (200 MPa), holding pressure (82 MPa)
3) Measurement conditions: screw rotation speed (50 rpm), back pressure (15 MPa)

Furthermore, the flexural modulus and the flexural strength were evaluated. The results are shown in Table 3.

### Examples 2, 7, and 10

Samples for evaluation of Examples 2 and 7 were prepared in the same manner as in Examples 1 and 6, respectively, except that the fabric (f-1) was replaced with a fabric (f-2). A sample for evaluation of Example 10 was prepared in the same manner as in Example 1, except that the fabric (f-1) was replaced with a fabric (f-2) to form a test piece (3) of 200 mm in length × 200 mm in width × 1.5 mm in thickness.

For example, the thickness of the resin layer of the sample for evaluation (laminated body) prepared in Example 2 was 1.84 mm, and the thickness of the non-woven fabric layer (support layer) was 0.16 mm. Thus, the thickness of the resin layer was 11.5 times the thickness of the support layer. The thicknesses of the resin layer and the support layer of each the samples for evaluation in the other Examples are as shown in Table 2-2. The results of fire blocking performance evaluation performed on the prepared samples for evaluation are shown in Table 2-1 and Table 2-2.

Furthermore, the flexural modulus and the flexural strength were evaluated. The results are shown in Table 3.

### Examples 3 and 8

Samples for evaluation of Examples 3 and 8 were prepared in the same manner as in Examples 1 and 6, respectively, except that the fabric (f-1) was replaced with two fabrics (f-2).

For example, the thickness of the resin layer of the sample for evaluation (laminated body) prepared in Example 3 was 1.73 mm, and the thickness of the non-woven fabric layer (support layer) was 0.27 mm. Thus, the thickness of the resin layer was 6.4 times the thickness of the support layer. The thicknesses of the resin layer and the support layer of the sample for evaluation of the other Examples are as shown in Table 2-2. The results of fire blocking performance evaluation performed on the prepared samples for evaluation are shown in Table 2-1 and Table 2-2.

Furthermore, the flexural modulus and the flexural strength were evaluated. The results are shown in Table 3.

### Examples 4, 9, 11, and 12

Samples for evaluation of Examples 4 and 9 were prepared in the same manner as in Examples 1 and 6, respectively, except that the fabric (f-1) was replaced with a fabric (f-3). A sample for evaluation of Example 11 was prepared in the same manner as in Example 1, except that the fabric (f-1) was replaced with a fabric (f-3) to form a test piece (3) of 200 mm in length × 200 mm in width × 1.5 mm in thickness. A sample for evaluation of Example 12 was prepared in the same manner as in Example 1, except that the fabric (f-1) was replaced with a fabric (f-3) to form a test piece (4) of 200 mm in length × 200 mm in width × 1.0 mm in thickness.

For example, the thickness of the resin layer of the sample for evaluation (laminated body) prepared in Example 4 was 1.89 mm, and the thickness of the non-woven fabric layer (support layer) was 0.11 mm. Thus, the thickness of the resin layer was 17.2 times the thickness of the support layer. The thicknesses of the resin layer and the support layer of each of the samples for evaluation of the other Examples are as shown in Table 2-2. The results of fire blocking performance evaluation performed on the prepared samples for evaluation are shown in Table 2-1 and Table 2-2. In Example 4, the evaluation of fire blocking performance (3) was also performed. The results are also shown together.

Furthermore, the flexural modulus and the flexural strength were evaluated. The results are shown in Table 3.

### Example 5

A sample for evaluation was prepared in the same manner as in Example 1, except that the fabric (f-1) was replaced with a fabric (f-4). The thickness of the resin layer of the prepared sample for evaluation (laminated body) was 1.83 mm, and the thickness of the non-woven fabric layer (support layer) was 0.17 mm. Thus, the thickness of the resin layer was 10.8 times the thickness of the support layer. The results of fire blocking performance evaluation performed on the prepared sample for evaluation are shown in Table 2-1. The evaluation of fire blocking performance (3) was also performed. The results are also shown together.

Furthermore, the flexural modulus and the flexural strength were evaluated. The results are shown in Table 3.

### Comparative Example 1

A test piece was prepared in the same manner as in Example 1, except that the support layer (f) was not used. The test piece was a molded article made of only a resin layer. The fire blocking performance was evaluated in the same manner as in Example 1. The results are shown in Table 2-1.

Furthermore, the flexural modulus and the flexural strength were evaluated. The results are shown in Table 3.

**[Table 2]**

| Table 2-1 | | | | | | | |
|---|---|---|---|---|---|---|---|
| | | Examples | | | | | Comparative Example |
| | | 1 | 2 | 3 | 4 | 5 | 1 |
| Compositional proportion | PP-based resin | 53.3 | 52.9 | 51.3 | 53.7 | 53.0 | 54.5 |
| | Glass fiber | 31.5 | 32.1 | 34.1 | 31.0 | 29.2 | 30.0 |
| | Aramid fiber | - | - | - | - | 2.7 | - |
| | Flame retardant | 14.7 | 14.5 | 14.1 | 14.8 | 14.6 | 15.0 |
| | Dispersant | 0.5 | 0.5 | 0.5 | 0.5 | 0.5 | 0.5 |
| Layer configuration | Support layer thickness (mm) | 0.14 | 0.16 | 0.27 | 0.11 | 0.17 | - |
| | Resin layer thickness (mm) | 1.86 | 1.84 | 1.73 | 1.89 | 1.83 | 2.00 |
| | Resin layer thickness/Support layer thickness | 13.3 | 11.5 | 6.4 | 17.2 | 10.8 | - |
| Evaluation results | Fire blocking performance | A | A | A | A | A | B |
| | Back surface temperature | 520 | 624 | 409 | 427 | 489 | - |
| | Flame contact evaluation Resin layer side/Support layer side | A/A | - | - | A/A | A/B | - |

**[Table 3]**

| Table 2-2 | | | | | | | | |
|---|---|---|---|---|---|---|---|---|
| | | Examples | | | | | | |
| | | 6 | 7 | 8 | 9 | 10 | 11 | 12 |
| Compositional proportion | PP-based resin | 53.3 | 52.9 | 51.3 | 53.7 | 52.9 | 53.7 | 53.7 |
| | Glass fiber | 31.5 | 32.1 | 34.1 | 31.0 | 32.1 | 31.0 | 31.0 |
| | Aramid fiber | - | - | - | - | - | - | - |
| | Flame retardant | 14.7 | 14.5 | 14.1 | 14.8 | 14.5 | 14.8 | 14.8 |
| | Dispersant | 0.5 | 0.5 | 0.5 | 0.5 | 0.5 | 0.5 | 0.5 |
| Layer configuration | Support layer thickness (mm) | 0.36 | 0.53 | 1.06 | 0.26 | 0.076 | 0.036 | 0.045 |
| | Resin layer thickness (mm) | 3.14 | 2.97 | 2.44 | 3.24 | 1.424 | 1.464 | 0.955 |
| | Resin layer thickness/support layer thickness | 8.72 | 5.60 | 2.30 | 12.46 | 18.74 | 40.67 | 21.22 |
| Evaluation results | Fire blocking performance | A | A | A | A | A | A | A |
| | Back surface temperature | 306 | 325 | 372 | 321 | 366 | 342 | 525 |

**[Table 4]**

| Table 3 | | | | |
|---|---|---|---|---|
| | Sample | Pressing side | Flexural strength (MPa) | Flexural modulus (MPa) |
| Example 1 | MD test piece | Side A | 103 | 8371 |
| | | Side B | 119 | 8472 |
| | TD test piece | Side A | 45 | 3667 |
| | | Side B | 56 | 3769 |
| Example 2 | MD test piece | Side A | 103 | 7801 |
| | | Side B | 128 | 8265 |
| | TD test piece | Side A | 47 | 3569 |
| | | Side B | 63 | 3808 |
| Example 3 | MD test piece | Side A | 102 | 7801 |
| | | Side B | 128 | 8265 |
| | TD test piece | Side A | 49 | 3696 |
| | | Side B | 63 | 3986 |
| Example 4 | MD test piece | Side A | 111 | 8610 |
| | | Side B | 125 | 8787 |
| | TD test piece | Side A | 45 | 3440 |
| | | Side B | 51 | 3483 |
| Example 5 | MD test piece | Side A | 104 | 7500 |
| | | Side B | 127 | 8261 |
| | TD test piece | Side A | 43 | 3622 |
| | | Side B | 72 | 3768 |
| Example 6 | MD test piece | Side A | 98 | 7271 |
| | | Side B | 120 | 7756 |
| | TD test piece | Side A | 45 | 3345 |
| | | Side B | 49 | 3350 |
| Example 7 | MD test piece | Side A | 99 | 7161 |
| | | Side B | 127 | 7777 |
| | TD test piece | Side A | 45 | 3545 |
| | | Side B | 51 | 3488 |
| Example 8 | MD test piece | Side A | 96 | 6536 |
| | | Side B | 128 | 7275 |
| | TD test piece | Side A | 48 | 3257 |
| | | Side B | 64 | 3619 |
| Example 9 | MD test piece | Side A | 102 | 6251 |
| | | Side B | 119 | 7809 |
| | TD test piece | Side A | 44 | 3300 |
| | | Side B | 48 | 3162 |
| Example 10 | MD test piece | Side A | 104 | 7018 |
| | | Side B | 127 | 7017 |
| | TD test piece | Side A | 45 | 3289 |
| | | Side B | 60 | 3501 |
| Example 11 | MD test piece | Side A | 112 | 7506 |
| | | Side B | 119 | 7402 |
| | TD test piece | Side A | 44 | 2885 |
| | | Side B | 49 | 2916 |
| Example 12 | MD test piece | Side A | 110 | 7911 |
| | | Side B | 129 | 7691 |
| | TD test piece | Side A | 55 | 3216 |
| | | Side B | 58 | 3542 |
| Comparative Example 1 | MD test piece | Side A | 111 | 8648 |
| | | Side B | 115 | 8775 |
| | TD test piece | Side A | 43 | 3474 |
| | | Side B | 43 | 3402 |

A flame of 1200°C from a burner did not penetrate each of the laminated bodies of Examples 1 to 12 even after application of the flame for 15 minutes, i.e., the laminated bodies exhibited very good results. In contrast, when a flame from a burner was applied to the molded article of Comparative Example 1 under the same conditions, the flame penetrated the molded article after approximately 90 seconds.

Furthermore, the laminated bodies of Examples 1 to 12 exhibited good results on both flexural strength and flexural modulus.

Although an aspect of the present invention has been described above, the present invention may also include the following aspects.

Other aspects of the present invention of the present application may include the following aspects.
[1] A battery housing comprising a resin layer containing a flame retardant, and a support layer laminated on at least one surface of the resin layer, wherein the resin layer and the support layer are arranged in this order from a battery storage unit side.
[2] The battery housing according to [1], wherein the resin layer comprises a resin composition containing (A) a thermoplastic resin and (B) a flame retardant, and the support layer is a fiber layer including fibers (X).
[3] The battery housing according to [2] above, wherein the fiber layer is a non-woven fabric layer comprising a non-woven fabric, a woven fabric layer comprising a woven fabric, or a knitted fabric layer comprising a knitted fabric.
[4] The battery housing according to [2] or [3] above, wherein the fibers (X) forming the fiber layer have a mean fiber length of from 5 to 100 mm.
[5] The battery housing according to any one of [2] to [4] above, wherein the resin composition further comprises (C) fibers, and the fibers have a mean fiber length of from 5 to 100 mm.
[6] The battery housing according to any one of [2] to [5] above, wherein the resin composition further comprises a dispersant (D).
[7] The battery housing according to any one of [1] to [6] above, wherein the resin layer has a thickness of from 0.5 to 50 mm.
[8] The battery housing according to any one of [2] to [7] above, wherein the flame retardant (B) comprises a phosphorus-based flame retardant.
[9] The battery housing according to any one of [2] to [7] above, wherein the flame retardant (B) comprises an intumescent flame retardant.
[10] The battery housing according to any one of [2] to [9] above, wherein the fibers (X) forming the fiber layer comprises inorganic fibers.
[11] The battery housing according to [10] above, wherein the inorganic fibers forming the fiber layer comprises at least one selected from the group consisting of glass fibers, ceramic fibers, metal fibers, and metal oxide fibers.
[12] The battery housing according to any one of [5] to [11] above, wherein the fibers (C) comprise inorganic fibers.
[13] The battery housing according to [12] above, wherein the inorganic fibers comprise at least one selected from the group consisting of glass fibers, ceramic fibers, metal fibers, and metal oxide fibers.
[14] The battery housing according to [6] above, wherein the dispersant (D) comprises a copolymer of an α-olefin and an unsaturated carboxylic acid.
[15] The battery housing according to any one of [2] to [14] above, wherein the thermoplastic resin (A) comprises a polypropylene-based resin, and a content of the polypropylene-based resin in the resin composition is from 15 to 80 mass%.
[16] The battery housing according to any one of [2] to [15] above, wherein a content of the flame retardant (B) in the resin composition is from 1 to 40 mass%.
[17] The battery housing according to any one of [6] to [16] above, wherein a content of the dispersant (D) is from 0.1 to 20 parts by mass per 100 parts by mass of the flame retardant (B).

Other aspects of the present invention may further include the following aspects.
[1] A laminated body including a resin layer and a support layer laminated on at least one surface of the resin layer, wherein the resin layer comprises a resin composition comprising (A) a thermoplastic resin and (B) a flame retardant, and the laminated body satisfies at least one of conditions (a1) and (b1) below:
   condition (a1): a minimum value of flexural modulus measured in accordance with JIS K7171 (ISO 178) is 1000 MPa or more; and
   condition (b1): a minimum value of flexural strength measured in accordance with JIS K7171 (ISO 178) is 10 MPa or more.
[2] The laminated body according to [1] above, wherein the laminated body satisfies the condition (a1) and a condition (a2) below:
   condition (a2): a minimum value of flexural modulus measured in accordance with JIS K7171 (ISO 178) is 3000 MPa or more.
[3] The laminated body according to [1] or [2] above, wherein the laminated body satisfies the condition (a1) and a condition (a3) below:
   condition (a3): an average of a numerical value of flexural modulus measured in a machine direction of a resin in accordance with JIS K7171 (ISO 178) and a numerical value of flexural modulus measured in a direction orthogonal to the machine direction in accordance with JIS K7171 (ISO 178) is 3000 MPa or more.
[4] The laminated body according to any one of [1] to [3] above, wherein the laminated body satisfies the condition (b1) and a condition (b2) below:
   condition (b2): a minimum value of flexural strength measured in accordance with JIS K7171 (ISO 178) is 30 MPa or more.
[5] The laminated body according to any one of [1] to [4] above, wherein the laminated body satisfies the condition (b1) and a condition (b3) below:
   condition (b3): an average of a numerical value of flexural strength measured in a machine direction of a resin in accordance with JIS K7171 (ISO 178) and a numerical value of flexural strength measured in a direction orthogonal to the machine direction in accordance with JIS K7171 (ISO 178) is 30 MPa or more.
[6] The laminated body according to any one of [1] to [5] above, wherein the support layer is a fiber layer comprising fibers (X).
[7] The laminated body according to [6] above, wherein the fiber layer is a non-woven fabric layer comprising a non-woven fabric, a woven fabric layer comprising a woven fabric, or a knitted fabric layer comprising a knitted fabric.
[8] The laminated body according to [6] or [7] above, wherein the fibers (X) forming the fiber layer have a mean fiber length of from 5 to 100 mm.
[9] The laminated body according to any one of [1] to [8] above, wherein the resin composition further comprises fibers (C), and the fibers have a mean fiber length of from 0.05 to 100 mm.
[10] The laminated body according to any one of [1] to [9] above, wherein the resin composition further comprises a dispersant (D).
[11] The laminated body according to any one of [1] to [10] above, wherein the resin layer has a thickness of from 0.5 to 50 mm.
[12] The laminated body according to any one of [1] to [11] above, wherein the flame retardant (B) comprises a phosphorus-based flame retardant.
[13] The laminated body according to any one of [1] to [11] above, wherein the flame retardant (B) comprises an intumescent flame retardant.
[14] The laminated body according to any one of [6] to [13] above, wherein the fibers (X) forming the fiber layer comprises inorganic fibers.
[15] The laminated body according to [14] above, wherein the inorganic fibers forming the fiber layer comprise at least one selected from the group consisting of glass fibers, ceramic fibers, metal fibers, and metal oxide fibers.
[16] The laminated body according to any one of [9] to [15] above, wherein the fibers (C) comprise inorganic fibers.
[17] The laminated body according to [16] above, wherein the inorganic fibers comprise at least one selected from the group consisting of glass fibers, ceramic fibers, metal fibers, and metal oxide fibers.
[18] The laminated body according to [10] above, wherein the dispersant (D) comprises a copolymer of an α-olefin and an unsaturated carboxylic acid.
[19] The laminated body according to any one of [1] to [18] above, wherein the thermoplastic resin (A) comprises a polypropylene-based resin, and a content of the polypropylene-based resin in the resin composition is from 15 to 80 mass%.
[20] The laminated body according to any one of [1] to [19] above, wherein a content of the flame retardant (B) in the resin composition is from 1 to 40 mass%.
[21] The laminated body according to any one of [10] to [20] above, wherein a content of the dispersant (D) is from 0.1 to 20 parts by mass per 100 parts by mass of the flame retardant (B).
[22] A method for producing the laminated body described in any one of [1] to [21] above, the method comprising forming a support layer laminated on at least one surface of a resin layer by impregnating a support with a resin composition, wherein the support has a thickness of from 0.01 to 30 mm before being impregnated with the resin composition.
[23] The method for producing the laminated body according to [22] above, wherein a support compression ratio defined by a ratio of a thickness of the support layer in the laminated body to a thickness of the support before being impregnated with the resin composition is from 15 to 75%.

### INDUSTRIAL APPLICABILITY

Because the laminated body of the present invention has significantly excellent fire blocking performance, the laminated body is useful as a material for various industrial parts that are required to have high safety, such as aircraft parts, ship parts, automobile parts, electrical and electronic device parts, and building materials. In particular, the laminated body can be suitably used for various housings and casings of batteries for which metals have been used so far, and is expected to contribute to the safety of automobiles, to improve energy efficiency due to weight reduction, and to reduce CO₂ emission.

### REFERENCE SIGNS LIST

10 Laminated body
11 Support layer
12 Resin layer
13 Flame retardant
14 Fibers
15 Support layer
16 Resin composition
21 Movable mold
22 Fixed mold
100 Battery
110 Battery module
120 Battery pack
130 Battery housing

## Claims

1. A laminated body comprising a resin layer and a support layer laminated on at least one surface of the resin layer, wherein
the resin layer comprises a resin composition comprising a thermoplastic resin (A), a flame retardant (B), and fibers (C);
the laminated body has a thickness of 0.5 mm or more; and
a thickness of the resin layer is equal to or greater than twice a thickness of the support layer.

2. The laminated body according to claim 1, wherein the support layer comprises a fiber layer including fibers (X).

3. The laminated body according to claim 2, wherein the fiber layer comprises a non-woven fabric layer including a non-woven fabric, a woven fabric layer including a woven fabric, or a knitted fabric layer including a knitted fabric.

4. The laminated body according to claim 2 or 3, wherein the fibers (X) forming the fiber layer have a mean fiber length of from 5 to 100 mm.

5. The laminated body according to claim 1, wherein the fibers have a mean fiber length of from 0.05 to 100 mm.

6. The laminated body according to claim 1, wherein the resin composition further comprises a dispersant (D).

7. The laminated body according to claim 1, wherein the resin layer has a thickness of from 0.5 to 50 mm.

8. The laminated body according to claim 1, wherein the flame retardant (B) comprises a phosphorus-based flame retardant.

9. The laminated body according to claim 1, wherein the flame retardant (B) comprises an intumescent flame retardant.

10. The laminated body according to claim 2 or 3, wherein the fibers (X) forming the fiber layer comprise inorganic fibers.

11. The laminated body according to claim 10, wherein the inorganic fibers forming the fiber layer comprise at least one selected from the group consisting of glass fibers, ceramic fibers, metal fibers, and metal oxide fibers.

12. The laminated body according to claim 1, wherein the fibers (C) comprise inorganic fibers.

13. The laminated body according to claim 12, wherein the inorganic fibers comprise at least one selected from the group consisting of glass fibers, ceramic fibers, metal fibers, and metal oxide fibers.

14. The laminated body according to claim 6, wherein the dispersant (D) comprises a copolymer of an α-olefin and an unsaturated carboxylic acid.

15. The laminated body according to claim 1, wherein the thermoplastic resin (A) comprises a polypropylene-based resin, and a content of the polypropylene-based resin in the resin composition is from 15 to 80 mass%.

16. The laminated body according to claim 1, wherein a content of the flame retardant (B) in the resin composition is from 1 to 40 mass%.

17. The laminated body according to claim 6, wherein a content of the dispersant (D) is from 0.1 to 25 parts by mass per 100 parts by mass of the flame retardant (B).

18. A method for producing the laminated body according to claim 1, the method comprising forming the support layer laminated on at least one surface of the resin layer by impregnating the support with a resin composition, wherein the support has a thickness of from 0.01 to 30 mm before being impregnated with the resin composition.

19. The method for producing the laminated body according to claim 18, wherein a support compression ratio defined by a ratio of a thickness of the support layer in the laminated body to a thickness of the support before being impregnated with the resin composition is from 15 to 75%.
